# EUROPÄISCHE PATENTSCHRIFT

(11) **EP 2 812 124 B1**
(45) Veröffentlichungstag und Bekanntmachung des Hinweises auf die Patenterteilung: **02.09.2015**
(21) Anmeldenummer: 13729611.7
(22) Anmeldetag: 08.05.2013
(51) Int. Cl.: B05C 1/02, B65H 35/00, C03C 17/00, B05C 13/02, B05B 13/04

(54) **VORRICHTUNG UND VERFAHREN ZUM AUFTRAGEN VON FARBE AUF EINE GLASPLATTE**
DEVICE AND METHOD FOR APPLYING PAINT TO A GLASS PLATE
DISPOSITIF ET PROCÉDÉ POUR L'APPLICATION DE PEINTURE SUR UNE PLAQUE DE VERRE

(30) Priorität: 10.05.2012 AT 2012012
(43) Veröffentlichungstag der Anmeldung: 17.12.2014
(73) Patentinhaber: Haselsteiner, Hubert, 3332 Biberbach (AT)
(72) Erfinder: Haselsteiner, Hubert, 3332 Biberbach (AT)
(74) Vertreter: KLIMENT & HENHAPEL
(86) Internationale Anmeldenummer: PCT/EP2013/059676
(87) Internationale Veröffentlichungsnummer: WO 2013/174659

(56) Entgegenhaltungen:
- EP-A1- 0 467 380
- WO-A1-2006/108471
- WO-A1-2009/074174
- DE-A1- 2 304 953
- DE-A1- 2 542 463
- JP-A- S 562 867
- JP-A- H1 142 453
- JP-A- S5 811 061
- JP-A- 2001 327 901

## Beschreibung

### GEBIET DER ERFINDUNG

Die vorliegende Erfindung bezieht sich auf eine Farbauftragsvorrichtung für eine Glasplatte.

Weitere betrifft die vorliegende Erfindung ein Verfahren zum Auftragen von Farbe auf eine Glasplatte.

### STAND DER TECHNIK

Das Auftragen von Farben auf plattenförmig Gegenstände gewinnt insbesondere im Zusammenhang mit dem Emaillieren von Glas zunehmend an Bedeutung. Dabei werden farbige keramische Schichten während der Herstellung von thermisch vorgespannten Gläsern in die Glasoberfläche eingebrannt. Dieses Verfahren wird auch als Bedrucken oder Beschichten bzw. Emaillieren bezeichnet. Das Emaille (auch Email genannt) wird während eines Teilvorspann- oder Härteverfahrens in kurzer Zeit (meist innerhalb von wenigen Sekunden) auf das Glas aufgeschmolzen und bildet eine feste, homogene Bindung mit der Glasmatrix. Wesentlicher Einflussfaktor in Bezug auf die erzielbare Qualität sowie Herstellungskosten ist dabei ein gleichwohl perfekter wie rascher Farbauftrag auf die Glasoberfläche vor dem thermischen Behandeln. Die dabei zum Einsatz kommenden Glasfarben bestehen in der Regel aus mehreren Komponenten unter Zusatz von Glasstaub. Je nach gewünschtem Ergebnis können sowohl transparente als auch undurchsichtige oder vollständig blickdichte Emaillen hergestellt werden sowie Zwischenstufen. Nach dem Brennvorgang sind derart emaillierte Glasplatten äußerst kratzfest und witterungsbeständig und werden als Einscheiben-Sicherheitsglas gehandelt.

Der für die Herstellung der Emaillierung erforderliche Farbauftrag erfolgt normalerweise einseitig auf der Glasplatte und kann im Siebdruck-, Walz- oder Sprühverfahren aufgebracht werden. Sowohl Siebdruck- als auch Sprühverfahren sind gegenüber dem Walzverfahren sowohl mit höheren Kosten als auch längeren Aufbringzeiten bzw. Anlagenrüstzeiten verbunden. Walzverfahren sind demgegenüber weniger aufwändig, erweisen sich jedoch bei der Herstellung von Emaillierungen, die nicht die gesamte zu bearbeitende Glasplatte betreffen, sondern beispielsweise nur den Rand, ebenfalls als zeit- und damit kostenintensiv, wenngleich in der Regel immer noch billiger als die erwähnten Siebdruck- oder Sprühverfahren. Vorrichtungen zur Durchführung solcher Walzverfahren besitzen stets eine Farbauftragswalze deren Länge normalerweise im Bereich der maximalen Breite der Härteanlagen, also zwischen 1500 mm und 3300 mm, liegt sowie eine in Betriebsposition darunter angeordnete Gegendruckwalze. Die mit einem Farbauftrag zu versehende Glasplatte wird dabei zwischen der Farbauftragswalze und der Gegendruckwalze ein- und durchgezogen und dabei vollflächig - aber auch teilflächig, siehe unten - mit Farbe versehen.

In diesem Zusammenhang ist die JP H11 42453 A zu nennen, die eine Vorrichtung mit einer Walze zur Farbauftragung auf plattenförmige Bauelemente zeigt, wobei die plattenförmigen Bauelemente bei der Farbauftragung mittels eines Förderbands bewegt werden.

Gerade in den vergangenen Jahren hat aber die Nachfrage nach nicht vollflächig emaillierten Glasplatten stark zugenommen. Vor allem im Standard-Fensterbau, Fassadenbau, aber auch im Innenausbau, in Form von Raumteilern oder im Sanitärbereich kommen Glasplatten zum Einsatz, die lediglich am Rand mit einem mehr oder weniger dicken Farbstreifen emailliert sind.

Zur Herstellung solcher Glasplatten müssen jene Flächen, welche nicht mit Farbe versehen werden sollen, zunächst manuell, vorzugsweise mit einer Folie, abgeklebt werden, bevor der eigentliche Farbauftrag beginnen kann. Darüber hinaus haben bekannte Vorrichtungen zur Durchführung des Walzverfahrens aufgrund Ihrer Auslegung zum vollflächigen Farbauftrag und der damit verbundenen Länge der Farbauftragswalze auch den Nachteil, dass stets die gesamte Farbauftragswalze mit Farbe zu tränken ist, obwohl lediglich ein wenige Zentimeter breiter Rand der Glasplatte mit Farbe beaufschlagt werden soll. Dadurch ergibt sich ein unnötig hoher Farbverbrauch, da ein Großteil der verwendeten Farbmenge nach dem Farbauftrag nicht am Glas aufgetragen ist, sondern auf der langen Farbauftragswalze bzw. der erwähnten Folie verbleibt, die wiederum zeitaufwendig und qualitätsmindernd wieder abgezogen werden muss. Hinzu kommt, dass bei einem Farbwechsel die Auftragswalze in ihrer gesamten Breite zeitaufwendig und mit hohem Farbverlust gereinigt werden muss. Gemeinsam mit dem hohen Reinigungsaufwand, der beim Farbwechsel an einer Farbauftragswalze erforderlich ist und oft länger als eine Stunde Zeit in Anspruch nimmt, ergeben sich dadurch ebenfalls unnötig hohe Herstellkosten, Rüstzeiten bzw. Stillstandzeiten.

Eine ähnliche Problematik ergibt sich beim Aufbringen einer dünnen Metallschicht - mit einer typischen Schichtdicke im Subnanometerbereich -, insbesondere auf bereits ausgehärtete Glasplatten. Das Aufbringen der Metallschicht erfolgt üblicherweise durch Aufdampfen oder mittels eines Sputterprozesses. Hierbei soll ein streifenförmiger Rand freigehalten werden, da in diesem Bereich bei der Montage der fertiggestellten Glasplatten eine Verklebung erfolgt und ein optimales Haften des Klebers nur auf dem Glas selbst, jedoch nicht auf der Metallschicht garantiert werden kann. Zu diesem Zweck wird der nicht zu beschichtende Randbereich mit einem Klebeband abgeklebt. Das Abkleben erfolgt üblicherweise per Hand. Einerseits ist dies sehr zeitintensiv, andererseits birgt dies das Risiko von Ungenauigkeiten in der Aufbringung. Es ist daher die Aufgabe der vorliegenden Erfindung, die oben geschilderten Nachteile zu vermeiden und eine Vorrichtung zum Auftragen von Farbe auf die ebene Oberfläche eines Gegenstands, vorzugsweise auf eine Glasplatte, mit Hilfe einer Farbauftragswalze zu schaffen, die einen wesentlich geringeren Farbverbrauch aufweist als dies bei bekannten solchen Vorrichtungen der Fall ist, sowie bei nicht vollflächigen Farbaufträgen das bislang praktizierte Abkleben von Teilen der Glasplatte obsolet macht.

### DARSTELLUNG DER ERFINDUNG

Erfindungsgemäß wird dies bei einer Vorrichtung gemäß Anspruch 1 erreicht.

Beim Auftragen muss somit die Glasplatte, nicht bewegt werden, sondern liegt unbewegt auf einer Auflagevorrichtung. Stattdessen wird die Farbauftragswalze bewegt, um einen entsprechend ihrer Breite bzw. ihrer Überlappung mit dem Rand der Glasplatte breiten Streifen aufzutragen. Die Farbauftragungswalze kann dabei sehr präzise geführt werden, sodass minimale Farbstreifenbreiten von 5 mm möglich sind. Bei einer bevorzugten Ausführungsform der erfindungsgemäßen Vorrichtung ist es vorgesehen, dass die Farbauftragswalze eine Breite von 100 mm bis 500 mm, vorzugsweise 300 mm aufweist. Somit kann beispielsweise ein lediglich 6 cm breiter Rand einer 6 m x 2,8 m messenden Glasplatte ökonomisch mit Farbe/Emaille beschichtet werden. Die Bewegung der Farbauftragswalze wird exakt, elektronisch gesteuert und erlaubt im Zusammenspiel mit der vollkommen bewegungslos festgehaltenen Glasplatte eine höchst präzise Farbauftragung, wobei ein punktgenaues Ansetzen bzw. Beginnen mit dem Farbauftrag an jeder beliebigen Stelle entlang einer Farbauftragsrichtung der Glasplatte gewährleistet ist.

Die Bewegung der Glasplatte erfolgt lediglich vor dem Auftragungsvorgang bzw. zwischen Auftragungsvorgängen, um die Glasplatte relativ zur Farbauftragungswalze auszurichten sodass der gewünschte Bereich der Glasplatte mit Farbe bedeckt werden kann. Sollen größere Flächen mit Farbe bedeckt werden, so wird die Glasplatte nach Auftragung jeweils eines Streifens um ein entsprechendes Stück verfahren, sodass die größere Fläche Stück für Stück mit Farbstreifen ausgefüllt wird. Dabei werden die Farbstreifen überlappend aufgetragen, um sicherzustellen, dass kein ungewünschter freier Bereich zwischen zwei Farbstreifen übrig bleibt. Die präzise Steuerung der Farbauftragswalze ermöglicht es hierbei, die Überlappung zweier Streifen auf 5 mm Breite zu beschränken. Alternativ dazu können die Farbstreifen präzise ohne Zwischenraum aneinander gereiht werden. Diese Präzision ist durch genaue elektronische Regelung der Bewegung der Farbauftragswalze über der fix liegenden Glasplatte möglich. Entsprechend ist eine Überlappung zwischen 0% und 100% der Breite eines Streifens der Farbe erzielbar.

Auch wenn zwei aneinander grenzende Ränder einer Glasplatte beschichtet werden sollen, lässt sich ein Überlappen der Farbstreifen im Eckbereich, wo die Ränder aufeinander stoßen, fast vollständig vermeiden bzw. auf 5 mm begrenzen. Demgegenüber kann bei bekannten Randbeschichtungsverfahren ein Doppelbeschichten im Eckbereich, hervorgerufen durch das Überkreuzen der Beschichtungsbreite in jeder Ecke der Glasplatte, nicht verhindert werden. D.h. hier kommt es zu einer Überlappung, die der vollen Breite der Farbauftragswalze entspricht und zu einem unerwünschten Schattenbereich führt. Neben der Überdeckung größerer Flächen ermöglicht die erfindungsgemäße Vorrichtung auch die Herstellung von Mustern, da der Farbauftrag nicht notwendigerweise am Rand der Glasplatte durchgeführt werden muss, sondern beispielsweise auch in der Mitte der Glasplatte erfolgen kann. Hierfür kann die Glasplatte auch unter der von der Glasplatte abgehobenen Farbauftragswalze hindurch geschoben werden.

Um die Farbauftragswalze linear verfahren zu können, ist es bei einer bevorzugten Ausführungsform der erfindungsgemäßen Vorrichtung vorgesehen, dass zumindest ein in der Rahmenkonstruktion gehaltener, zur Auflagevorrichtung beabstandet verlaufender Trägerbalken oder zumindest eine in der Rahmenkonstruktion gehaltene Führungsschiene vorgesehen sind, entlang welchen die Farbauftragswalze verfahrbar angeordnet sind. Die Rahmenkonstruktion kann ihrerseits Teil einer Tischkonstruktion sein.

Wenn die Farbauftragswalze auf Führungsschienen verfahren werden, kann die Glasplatte nicht beliebig weit, sondern höchstens bis zu diesen Führungsschienen unter der (abgehobenen) Farbauftragswalze verschoben werden. D.h. in diesem Fall ist die Herstellung beliebiger Muster nicht uneingeschränkt möglich, da die Glasplatte in Abhängigkeit von ihrer Größe im Allgemeinen nicht vollständig unter der Farbauftragswalze hindurchgeschoben werden kann.

Die Rahmenkonstruktion ermöglicht außerdem eine stabile Anordnung der Auflagevorrichtung. Entsprechend ist es bei einer bevorzugten Ausführungsform der erfindungsgemäßen Vorrichtung vorgesehen, dass die Auflagevorrichtung ortsfest mit der Rahmenkonstruktion verbunden ist.

Um einen besonders gründlichen Farbauftrag zu ermöglichen, muss die Farbauftragswalze mit einem gewissen Druck gegen die Glasplatte gedrückt werden.

Entsprechend ist es notwendig, die Glasplatte zu unterstützen. Diese Unterstützung kann erfindungsgemäß durch einen flächenförmigen Gegenhalteabschnitt der Auflagevorrichtung realisiert werden, dessen Breite zumindest der Breite der Farbauftragswalze entspricht. Daher ist es bei einer bevorzugten Ausführungsform der erfindungsgemäßen Vorrichtung vorgesehen, dass die Auflagevorrichtung einen flächenförmigen Gegenhalteabschnitt aufweist, gegen welchen die Farbauftragswalze unter Zwischenlage der Glasplatte pressbar ist.

Um den Gegenhalteabschnitt seinerseits räumlich stabil zu fixieren, ist erfindungsgemäß die Verwendung eines Profilrohrs vorgesehen, welches Teil der Rahmenkonstruktion ist. Daher ist es bei einer bevorzugten Ausführungsform der erfindungsgemäßen Vorrichtung vorgesehen, dass auf der der Farbauftragswalze gegenüberliegenden Seite des Gegenhalteabschnitts ein Profilrohr als Bestandteil der Rahmenkonstruktion angeordnet ist, auf welchem der Gegenhalteabschnitt zumindest teilweise aufliegt bzw. abgestützt ist.

Die leichte Bewegbarkeit der Glasplatte am Gegenhalteabschnitt wird in einer bevorzugten Ausführungsform der erfindungsgemäßen Vorrichtung dadurch erreicht, dass der Gegenhalteabschnitt zumindest teilweise mit einer haftungsmindernden Beschichtung, vorzugsweise aus Teflon, versehen ist.

Um den korrekten Anpressdruck der Farbauftragswalze an die Glasplatte zu garantieren und die Glasplatte vor etwaigen Biegebeanspruchungen zu schützen, ist es notwendig, dass der Gegenhalteabschnitt perfekt parallel zur Verfahrrichtung der Walze verläuft. Entsprechend müssen etwaige Unregelmäßigkeiten, beispielsweise verzogene Stellen der Rahmenkonstruktion ausgeglichen werden können. Zu diesem Zweck ist am Profilrohr eine Niveauausgleichsplatte befestigt, vorzugsweise angeschweißt. Auf der Niveauausgleichsplatte wiederum ist eine mehrere Segmente umfassende Segmentplatte angeordnet, wobei der Abstand zwischen jedem Segment der Segmentplatte und der Niveauausgleichsplatte und damit zum Profilrohr eingestellt werden kann. Auf der Segmentplatte liegt dann der Gegenhalteabschnitt auf. Daher ist es bei einer bevorzugten Ausführungsform der erfindungsgemäßen Vorrichtung vorgesehen, dass zwischen Profilrohr und Gegenhalteabschnitt der Auflagevorrichtung eine in ihrem Abstand zum Profilrohr einstellbare Segmentplatte angeordnet ist.

Die Abstandseinstellung und die Fixierung der Segmentplatte erfolgt in einfacher Weise durch den Einsatz von Justierschrauben und Fixierschrauben, die in Gewinde an der Niveauausgleichsplatte geschraubt werden. Entsprechend ist es bei einer bevorzugten Ausführungsform der erfindungsgemäßen Vorrichtung vorgesehen, dass der Abstand zwischen Profilrohr und Segmentplatte mittels Justierschrauben und Fixierschrauben einstellbar und fixierbar ist, wobei die Justierschrauben und die Fixierschrauben in einer Niveauausgleichsplatte aufgenommen sind, welche am Profilrohr befestigt, vorzugsweise angeschweißt ist. Diese Einstellmöglichkeit ist auch erforderlich, um einen eventuell entstehenden Niveauunterschied zwischen dem Zustelltisch und der Gegenhalterplatte zu einem späteren Zeitpunkt nach der Installation ausgleichen zu können.

Alternativ zum flächenförmigen Gegenhalteabschnitt ist auch der Einsatz einer Gegenhalterolle möglich. Hierzu weist die Auflagevorrichtung eine Ausnehmung auf, in welcher die Gegenhalterolle synchron zur Farbauftragswalze bewegt werden kann, um einen gleichmäßigen Anpressdruck über den gesamten Auftragungsvorgang zu garantieren. Entsprechend ist es bei einer weiteren bevorzugten Ausführungsform der erfindungsgemäßen Vorrichtung vorgesehen, dass die Auflagevorrichtung eine Ausnehmung aufweist, in welcher eine Gegenhalterolle angeordnet ist, dass die Gegenhalterolle in der Rahmenkonstruktion synchron zur Farbauftragswalze verfahrbar gehalten ist und dass die Farbauftragswalze unter Zwischenlage des Gegenstandes gegen die Gegenhalterolle pressbar ist.

Um Farbe auf die Farbauftragungswalze mit einer gewünschten Dicke aufzutragen, wird eine an sich bekannte Doktorwalze verwendet, die mit der Farbauftragungswalze zusammenarbeitet und manchmal auch als Dosierwalze bezeichnet wird. Um eine dauerhaft gleichmäßige Konsistenz der auf die

Farbauftragungswalze aufzubringenden Farbe zu garantieren, kommt eine Farbmixereinheit zum Einsatz, die in Richtung der Auftragung der Farbe auf die Farbauftragungswalze gesehen unmittelbar vor der Farbauftragungswalze und der Doktorwalze angeordnet ist. Selbstverständlich müssen die Doktorwalze und die Farbmixereinheit mit der Farbauftragungswalze mitbewegt werden. Daher ist es bei einer bevorzugten Ausführungsform der erfindungsgemäßen Vorrichtung vorgesehen, dass eine Auftragseinheit vorgesehen ist, welche zumindest die Farbauftragswalze, eine mit dieser zusammenarbeitende Doktorwalze sowie eine Farbmixereinheit umfasst und welche Auftragseinheit entlang des mindestens einen Trägerbalkens oder der mindestens einen Führungsschiene verfahrbar angeordnet ist.

Insbesondere wenn mehrere unterschiedliche Farbschichten aufgetragen werden sollen, ist es von Vorteil eine zusätzliche Farbauftragungswalze bzw. eine zusätzliche Auftragseinheit vorzusehen, die ebenfalls, vorzugsweise entlang des Trägerbalkens bzw. der Führungsschienen, verfahrbar ist. Während die Farbauftragung mit der zusätzlichen Farbauftragungswalze erfolgt, kann die (erste) Farbauftragungswalze gereinigt und gegebenenfalls mit einer weiteren Farbe versehen werden, sodass die Auftragung unterschiedlicher Farben sehr zeitsparend durchgeführt werden kann. Daher ist es bei einer bevorzugten Ausführungsform der erfindungsgemäßen Vorrichtung vorgesehen, dass eine zusätzliche Farbauftragswalze in der Rahmenkonstruktion verfahrbar gehalten ist.

Insbesondere ist es bei einer bevorzugten Ausführungsform der erfindungsgemäßen Vorrichtung vorgesehen, dass die zusätzliche Farbauftragswalze Teil einer zusätzlichen Auftragseinheit ist, wobei die zusätzliche Auftragseinheit weiters eine zusätzliche Doktorwalze umfasst und entlang des mindestens einen Trägerbalkens oder der mindestens einen Führungsschiene verfahrbar angeordnet ist.

Um auch komplexere Muster mittels Siebdruck an einer praktisch beliebigen Stelle der Glasplatte aufbringen zu können, ist es bei einer besonders bevorzugten Ausführungsform der erfindungsgemäßen Vorrichtung vorgesehen, dass an der Auftragseinheit ein Rakelwerk befestigt ist, welches mit der Auftragseinheit verfahrbar ist und welches eine Flutrakel und/oder eine Druckrakel umfasst. Die Befestigung des Rakelwerks an der Auftragseinheit erfolgt dabei mittels einer Halterung. Die Rakeln sind motorisch oder pneumatisch bewegbar.

Ein Sieb mit einem Siebrahmen wird in eine Siebhalterung, welche an der Rahmenkonstruktion heb- und senkbar montiert ist, eingeschoben und gegenüber der Glasplatte ausgerichtet. Mit der motorisch bzw. pneumatisch bewegbaren Flutrakel wird die Farbe im Sieb gleichmäßig verteilt. Mit der motorisch bzw. pneumatisch bewegbaren Druckrakel wird die Farbe durch das Sieb auf die Glasplattenoberfläche gedruckt. Indem die zu bedruckende Glasplatte unter dem Sieb verschoben wird, kann der Siebdruck an unterschiedlichen, beliebigen Stellen der Glasplatte erfolgen.

Um aufgetragene Farbe rasch und ohne große Transportbewegungen der Glasplatte trocknen zu können, kann eine Heizeinrichtung an der Auftragseinheit befestigt und mit dieser in einem definierten Abstand - typischerweise 5 mm - linear über die Glasplatte bewegt werden. Die Breite der Heizeinrichtung entspricht dabei der maximalen Breite der Farbauftragswalze, typischerweise 300 mm. Aus der Heizeinrichtung wird heiße Luft mit typischerweise 200°C bis 300°C in Richtung der Glasplatte geblasen. Auf diese Weise kann beispielsweise eine aufgetragene Schicht vor dem eigentlichen Emaillierungsschritt, der bei weit höheren Temperaturen erfolgt, vorgetrocknet werden. Oder es kann eine erste Farbschicht rasch getrocknet werden, wenn hierauf eine weitere Farbschicht auf der ersten Farbschicht aufgetragen werden soll. Daher ist es bei einer besonders bevorzugten Ausführungsform der erfindungsgemäßen Vorrichtung vorgesehen, dass an der Auftragseinheit eine Heizeinrichtung befestigt ist, welche mit der Auftragseinheit verfahrbar ist.

Um einen Farbstreifen entlang einer ersten Kante einer Glasplatte aufzutragen, wird die Glasplatte mit der ersten Kante parallel zum Trägerbalken bzw. zu den Führungsschienen orientiert und so positioniert, dass durch Verfahren der Farbauftragswalze entlang des Trägerbalkens bzw. der Führungsschienen der gewünschte Farbstreifen aufgebracht wird, wie oben beschrieben. Um nun einen Farbstreifen entlang einer zweiten Kante, die üblicherweise normal auf die erste Kante steht, aufzutragen, kann die Glasscheibe entsprechend gedreht werden, sodass die zweite Kante parallel zum Trägerbalken bzw. zu den Führungsschienen zu liegen kommt.

Alternativ hierzu kann aber auch vorgesehen sein, dass die Farbauftragsrolle bzw. die Auftragseinheit verdreht werden kann. In der Folge wird nun die verdrehte Farbauftragsrolle in einer Richtung, die vorzugsweise normal auf eine Längsachse des Trägerbalkens steht, verfahren. Dies ist insbesondere dann möglich, wenn der gesamte Trägerbalken mitsamt der Auftragseinheit in einer Richtung normal auf die Längsachse des Trägerbalkens verfahrbar ist. Daher ist es bei einer bevorzugten Ausführungsform der erfindungsgemäßen Vorrichtung vorgesehen, dass die Farbauftragswalze um eine auf die Auflagevorrichtung normal stehende Achse verdrehbar ist und dass die Farbauftragswalze in einer Richtung normal auf eine Längsachse des Trägerbalkens verfahrbar ist, vorzugsweise gemeinsam mit dem Trägerbalken.

Um insbesondere große Glasplatten mit der erfindungsgemäßen Vorrichtung bearbeiten zu können, ist es erfindungsgemäß vorgesehen, diese Glasplatten mittels eines Zustelltisches, der an die Auflagevorrichtung bündig anschließt, zusätzlich zu unterstützen. Um die Glasplatte auf diesem Zustelltisch problemlos bewegen zu können, ist der Zustelltisch vorzugsweise als Luftkissentisch ausgeführt. Daher ist es bei einer bevorzugten Ausführungsform der erfindungsgemäßen Vorrichtung vorgesehen, dass ein Zustelltisch vorgesehen ist, an welchen die Auflagevorrichtung bündig anschließt oder von welchem die Auflagevorrichtung einen Abschnitt bildet, wobei der Zustelltisch vorzugsweise als Luftkissentisch ausgebildet ist.

Um die Glasplatte besonders effizient und genau auf dem Zustelltisch bewegen und zum Trägerbalken oder zu den Führungsschienen bzw. zur Farbauftragswalze und/oder zur Abklebevorrichtung positionieren zu können, ist es bei einer besonders bevorzugten Ausführungsform der erfindungsgemäßen Vorrichtung vorgesehen, dass der Zustelltisch zumindest zwei Transportriemen aufweist, um den Gegenstand linear zu bewegen, wobei an den Transportriemen Saugelemente angeordnet sind, um den Gegenstand zu fixieren. Hierbei können die Saugelemente in Saugelementleisten befestigt sein, die über Quetschverbindungen mit den Transportriemen verbunden sind. Um die Glasplatte mit einer Kante genau parallel zum Trägerbalken bzw. zu den Führungsschienen ausrichten zu können, ist es bei einer besonders bevorzugten Ausführungsform der erfindungsgemäßen Vorrichtung vorgesehen, dass der Zustelltisch eine Drehplatte aufweist, welche um eine Achse normal auf die Auflagevorrichtung drehbar ist und an welcher Drehplatte Saugelemente zur Fixierung des Gegenstandes angeordnet sind. Somit können, wie oben beschrieben, nacheinander Farbstreifen entlang unterschiedlicher Kanten der Glasplatte aufgebracht werden, auch wenn die Farbauftragswalze bzw. die Auftragseinheit bzw. die Aufklebevorrichtung nicht um eine normal auf die Auflagevorrichtung stehende Achse verdrehbar ist. Hierbei muss die Glasplatte bei den entsprechenden Ausrichtevorgängen nicht von Hand bewegt werden, sondern wird hochpräzise motorisch bewegt.

Um hierbei insbesondere die gewünschte Kante der Glasplatte perfekt parallel zur Farbauftragswalze bzw. zu deren linearer Bewegungsrichtung entlang des Trägerbalkens bzw. der Führungsschienen auszurichten, ist es bei einer besonders bevorzugten Ausführungsform der erfindungsgemäßen Vorrichtung vorgesehen, dass der Zustelltisch mindestens zwei optische oder mechanische Sensoren aufweist, um die Ausrichtung des Gegenstandes zu überprüfen. Die optischen oder mechanischen Sensoren können dabei fix im Zustelltisch parallel zur Längsachse des Trägerbalkens bzw. parallel zu den Führungsschienen angeordnet sein. Alternativ können die Sensoren gemeinsam mit den Saugelementen an den Transportriemen angeordnet sein. Im Falle, dass die Saugelemente in Saugelementleisten befestigt sind, bietet es sich an, auch die Sensoren in den Saugelementleisten zu montieren bzw. in die Saugelementleisten zu integrieren. Durch Bewegen der Transportriemen bzw. der Saugelementleisten können die Sensoren somit je nach Bedarf parallel zur Längsachse des Trägerbalkens bzw. parallel zu den Führungsschienen ausgerichtet werden.

In einer bevorzugten Ausführungsform werden alle Transportriemen über einen gemeinsamen Antriebsriemen gemeinsam und parallel bzw. synchron bewegt. In diesem Fall sind sämtliche Sensoren stets parallel zur Längsachse des Trägerbalkens bzw. parallel zu den Führungsschienen ausgerichtet. Verwendet werden stets jene zwei Sensoren, die an den beiden äußersten Transportriemen angeordnet sind, welche von der Glasplatte noch überdeckt werden.

Nach einer manuellen Vororientierung durch den Benutzer wird die Glasplatte zunächst mittels der Transportriemen und der an den Transportriemen angeordneten Saugelemente über der Drehplatte positioniert. Dabei soll der Mittelpunkt der Glasplatte möglichst über der Drehachse der Drehplatte zu liegen kommen. Anschließend werden die Saugelemente der Drehplatte aktiviert und die Saugelemente an den Transportriemen deaktiviert. Nun werden die besagten Sensoren an den Transportriemen in Richtung Trägerbalken/Führungsschienen bewegt, bis die Sensoren die dem Trägerbalken / den Führungsschienen bzw. der Auflagevorrichtung zugewandte Glasplattenkante passieren. Sobald die Sensoren diese Glasplattenkante passiert haben, werden die Transportriemen gestoppt und langsam zurück gefahren. Erreichen nun beide Sensoren gleichzeitig die Glasplattenkante, so bedeutet das, dass die Glasplattenkante parallel zum Trägerbalken bzw. zu dessen Längsachse bzw. zu den Führungsschienen verläuft und für den Farbauftrag korrekt ausgerichtet ist. Andernfalls muss die Glasplatte mittels der Drehplatte entsprechend gedreht werden, um die Ausrichtung der Glasplattenkante zu verbessern, woraufhin die Ausrichtung wieder, wie eben beschrieben, überprüft wird, und so fort. Anschließend werden die Transportriemen ein Stück, typischerweise 200 mm, von der Glasplattenkante zurück gefahren, und die Saugelemente an den Transportriemen saugen die Glasplatte wieder an. Die Saugelemente der Drehscheibe werden gelöst. Somit kann die Glasplatte für den Beschichtungsvorgang in Richtung Trägerbalken/Führungsschienen, unter die Auftragseinheit verfahren werden. Schließlich kann zur besseren Fixierung der Glasplatte während des Farbauftrags die Luftkissenfunktion des Zustelltischs deaktiviert und stattdessen eine Saugfunktion aktiviert werden.

Erfindungsgemäß wird die Aufgabe der vorliegenden Erfindung auch durch das Verfahren gemäß Anspruch 14 erreicht.

Die lineare Bewegungsrichtung der Farbauftragswalze ist hierbei mit der Farbauftragsrichtung der Farbe gleich zu setzen bzw. verläuft die lineare Bewegungsrichtung parallel zur Längsachse des Trägerbalkens bzw. zu den Führungsschienen.

Es sei bemerkt, dass grundsätzlich auch die Möglichkeit besteht, bei gleicher Drehrichtung der Farbauftragswalze eine entgegengesetzte Farbauftragsrichtung zu wählen, indem die Farbauftragswalze nicht gegen die ebene Oberfläche des Gegenstands, vorzugsweise der Glasplatte, gepresst wird. Stattdessen wird die Farbauftragswalze in einem geringen Abstand von 0 mm bis einige Zehntelmillimeter von der - still liegenden - Glasplatte über diese bewegt, wobei sich die Farbauftragswalze gegen die lineare Bewegung der Farbauftragswalze bzw. der Auftragseinheit dreht.

Weiters ist es bei einer besonderen Ausführungsform des erfindungsgemäßen Verfahrens vorgesehen, dass das Ausrichten des Gegenstands die folgenden Schritte umfasst:
- Synchrones Bewegen von zwei optischen oder mechanischen Sensoren, die parallel zur linearen Bewegungsrichtung in einem bekannten Abstand zueinander angeordnet sind, in einer Positionierrichtung, die in Richtung der Farbauftragswalze weist und normal auf die lineare Bewegungsrichtung steht, bis beide Sensoren eine der Auflagevorrichtung zugewandte Kante der Glasplatte passiert haben;
- Synchrones Bewegen der beiden Sensoren mit einer definierten Positioniergeschwindigkeit gegen die Positionierrichtung;
- Messung der Zeitdifferenz zwischen dem erneuten Erreichen der Kante durch die beiden Sensoren;
- Berechnung eines Drehwinkels;
- Drehung des Gegenstands um den Drehwinkel.

Um die Glasplatte bereits bei der manuellen Aufgabe auf den Zustelltisch möglichst richtig auszurichten, ist es bei einer besonders bevorzugten Ausführungsform der erfindungsgemäßen Vorrichtung vorgesehen, dass an der Auftragseinheit eine Lasereinheit angeordnet ist, um eine optische Hilfslinie auf dem Zustelltisch zu erzeugen. Die Lasereinheit ist also mit der Auftragseinheit verfahrbar, sodass die Hilfslinie von einer praktisch beliebigen Stelle entlang des Trägerbalkens bzw. der Führungsschienen ausgehen kann. Der Benutzer muss sich nun an der Hilfslinie orientieren und die Glasplatte manuell so ausrichten, dass eine Kante im Wesentlichen entlang der Hilfslinie verläuft. Die Glasplatte ist somit zumindest grob vororientiert, sodass üblicherweise bei der oben beschriebenen, motorischen Präzisionsausrichtung keine großen Änderungen der Ausrichtung mehr nötig sind. Entsprechend rasch kann die motorische Präzisionsausrichtung vonstatten gehen. Die Drehplatte ist insbesondere beim Ausrichten von großformatigen Glasplatten mit Abmessungen von bis zu 6 m x 2,8 m oder mehr hilfreich. Für das Ausrichten von kleineren Glasplatten mit Abmessungen zwischen typischerweise 1,2 m x 1,2 m und 0,305 m x 0,305 m hat sich die Vorsehung einer weiteren, kleineren Drehplatte als vorteilhaft herausgestellt. Diese ist sinnvollerweise zwischen zwei Transportriemen angeordnet, deren Abstand in Richtung der Längsachse des Trägerbalkens gemessen geringer ist als jener zwischen zwei Transportriemen, zwischen denen die große Drehplatte positioniert ist. Darüber hinaus ist es sinnvoll die kleinere Drehplatte näher zum Trägerbalken bzw. zu den Führungsschienen bzw. zur Auflagefläche zu positionieren, sodass sich eine Anordnung der kleineren Drehplatte zwischen der großen Drehplatte und der Auflagefläche ergibt. Entsprechend ist es bei einer besonders bevorzugten Ausführungsform der erfindungsgemäßen Vorrichtung vorgesehen, dass der Zustelltisch eine weitere Drehplatte aufweist, die zwischen der Drehplatte und der Auflagefläche angeordnet ist, wobei zwischen der Drehplatte und der weiteren Drehplatte zumindest ein Transportriemen verläuft, an welchem Saugelemente angeordnet sind.

Selbstverständlich ist es auch möglich, die Glasplatte manuell oder mit Hilfe der Drehplatte bzw. der zusätzlichen Drehplatte so auszurichten, dass keine Glasplattenkante parallel zur Farbauftragsrichtung verläuft. Beispielsweise kann die Glasplatte auch so orientiert werden, dass eine Flächendiagonale oder sonst eine beliebige Linie innerhalb der Oberfläche der Glasplatte parallel zur Farbauftragsrichtung verläuft. Auf diese Weise können Streifen bzw. Streifenmuster auf der Glasplatte mittels der Farbauftragswalze bzw. der zusätzlichen Farbauftragswalze aufgetragen werden, ohne dass die Streifen parallel zu einer Glasplattenkante zu verlaufen brauchen. Dieses schräge oder diagonale Farbauftragen eignet sich beispielsweise, um, wie von einer europäischen Norm gefordert, schräg verlaufende Balken auf Glasplatten von Ganzglastüren aufzubringen, um die Öffnungsseite der Türe erkenntlich zu machen. Bislang war dies nur mit Siebdruckverfahren oder durch entsprechendes Abkleben der Glasplatte in Kombination mit dem bekannten, farbverbrauchsintensiven Walzverfahren möglich.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Aufsicht auf eine erfindungsgemäße Vorrichtung
- Fig. 2: eine Aufsicht auf eine erfindungsgemäße Vorrichtung mit Zustelltisch
- Fig. 3: eine axonometrische Ansicht einer erfindungsgemäßen Vorrichtung mit Zustelltisch
- Fig. 4: eine axonometrische Detailansicht einer Auftragseinheit
- Fig. 5: eine axonometrische Detailansicht einer Auftragseinheit, die über einem flächenförmigen Gegenhalteabschnitt einer Auflagevorrichtung positioniert ist, sowie einen Schnitt durch den Gegenhalteabschnitt, eine darunter angeordnete Niveauausgleichsplatte und ein Profilrohr
- Fig. 6: eine andere Perspektive der Fig. 5
- Fig. 7: eine axonometrische Schnittansicht durch einen Zustelltisch mit einer Drehplatte gemäß der Schnittlinie A-A in Fig. 2
- Fig. 8: eine axonometrische Ansicht einer Siebvorrichtung, die mit einer Auftragseinheit verbunden ist
- Fig. 9: eine axonometrische Ansicht einer erfindungsgemäßen Vorrichtung mit Zustelltisch und einer zusätzlichen Auftragseinheit
- Fig. 10: eine axonometrische Ansicht einer aufgekantet angeordneten Vorrichtung
- Fig. 11: eine Schnittansicht einer Auftragseinheit, die über einer Gegenhalterolle angeordnet ist, analog zur Schnittlinie B-B in Fig. 2, wobei die Pfeile die Blickrichtung andeuten
- Fig. 12: eine Schnittansicht, in der neben einer Siebvorrichtung eine mit der Auftragseinheit verbundene Heizeinrichtung schematisch dargestellt ist, analog zur Schnittlinie B-B in Fig. 2, wobei die Pfeile die Blickrichtung andeuten
- Fig. 13: eine Schnittansicht gemäß der Schnittlinie A-A in Fig. 2, wobei die Blickrichtung gegen die Pfeilrichtung gerichtet ist
- Fig. 14: eine Seitenansicht einer erfindungsgemäßen Vorrichtung mit einer Auftragseinheit und einer Abklebevorrichtung
- Fig. 15: eine vergrößerte Darstellung der Abklebevorrichtung der Fig. 14
- Fig. 16: eine Seitenansicht einer erfindungsgemäßen Vorrichtung mit Führungsschienen, auf welchen eine Auftragseinheit verfahrbar angeordnet ist

### WEGE ZUR AUSFÜHRUNG DER ERFINDUNG

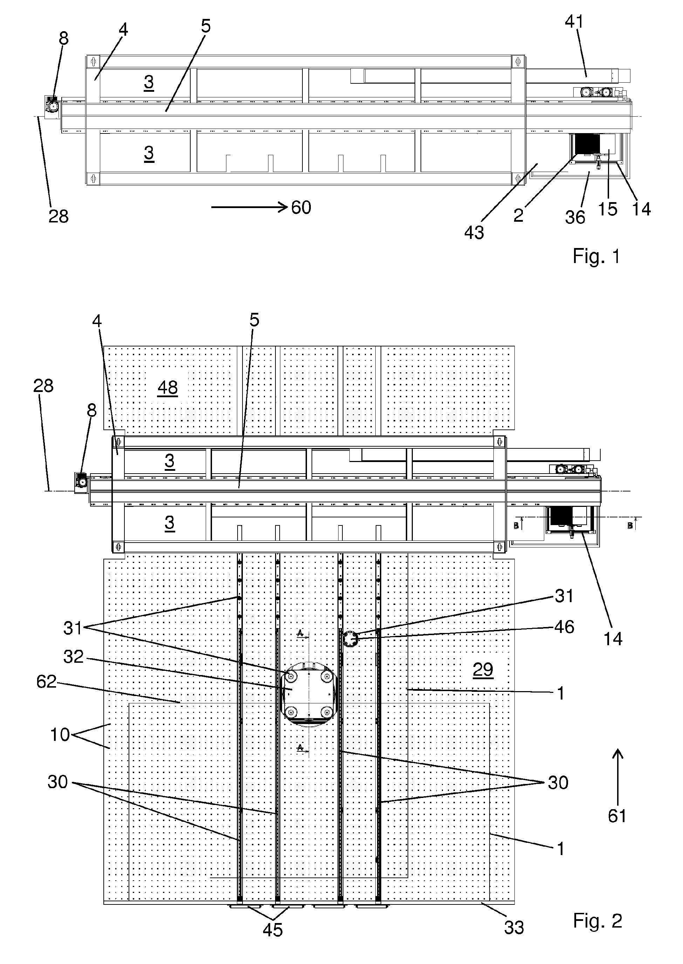

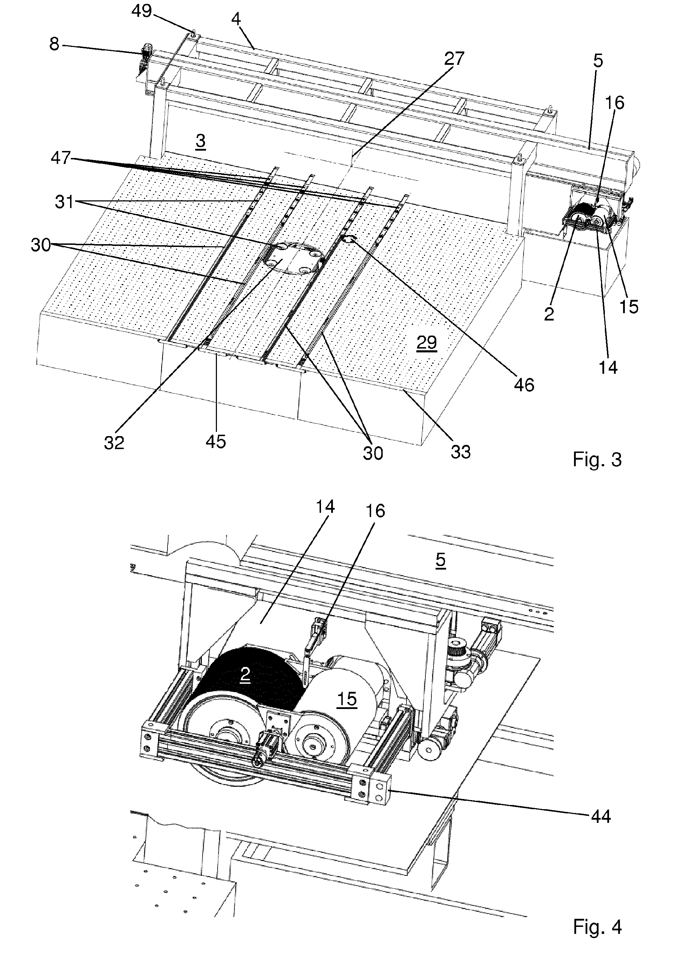

Fig. 1 zeigt eine erfindungsgemäße Vorrichtung zum Auftragen von Farbe auf eine Glasplatte 1 (vgl. Fig. 2) in Aufsicht. Die Vorrichtung umfasst eine Auflagevorrichtung 3, auf welche die Glasplatte 1 aufgelegt werden kann. Die Auflagevorrichtung 3 wird in einer Rahmenkonstruktion 4 gehalten. Essentieller Teil der dargestellten Ausführungsform der Rahmenkonstruktion 4 ist ein Trägerbalken 5, der über der Auflagevorrichtung 3 angeordnet ist und sich entlang einer Längsachse 28 erstreckt. D.h. die Glasplatte 1 kann auf der Auflagevorrichtung 3 aufliegend unter dem Trägerbalken 5 durchgeschoben werden, sodass nicht nur Randbereiche der Glasplatte 1, sondern beliebige Bereiche auf der Glasplatte 1 mit Farbe versehen werden können. An der Rahmenkonstruktion 4 sind außerdem Transporthaken 49 (vgl. Fig. 3) angeordnet, die das Bewegen der Vorrichtung mittels eines Krans (nicht dargestellt) gestatten.

Am Trägerbalken 5 ist eine Auftragseinheit 14 angeordnet, die sich entlang der Längsachse 28 verfahren lässt, wobei als Antrieb eine Motor/Getriebeeinheit 8 vorgesehen ist. Die Auftragseinheit 14 umfasst eine Farbauftragswalze 2, die zur Auftragung der Farbe auf die Glasplatte 1 dient. Die Farbe wiederum wird mittels einer Doktorwalze 15, die ebenfalls Teil der Auftragseinheit 14 ist und auch Dosierwalze genannt wird, in an sich bekannter Weise auf die Farbauftragswalze 2 aufgebracht, wobei durch Einstellung des Abstandes zwischen Farbauftragswalze 2 und Doktorwalze 15 die Dicke der Farbschicht auf der Farbauftragswalze 2 - und damit die Dicke der auf die Glasplatte 1 aufzutragenden Farbschicht - eingestellt werden kann. Die Auftragseinheit 14 umfasst weiters eine Farbmixereinheit 16 (vgl. Fig. 4), die dafür sorgt, dass die Konsistenz der auf die Farbauftragswalze 2 aufgebrachten Farbe gleichmäßig bleibt. Typischerweise weist die Farbmixereinheit 16 hierzu ein Rührelement auf, welches sich in der Farbe zyklisch bewegt. Farbauftragswalze 2, Doktorwalze 15 sowie die Farbmixereinheit 16 werden mittels Elektromotoren angetrieben, die über eine Energiekette 41 mit Strom versorgt werden.

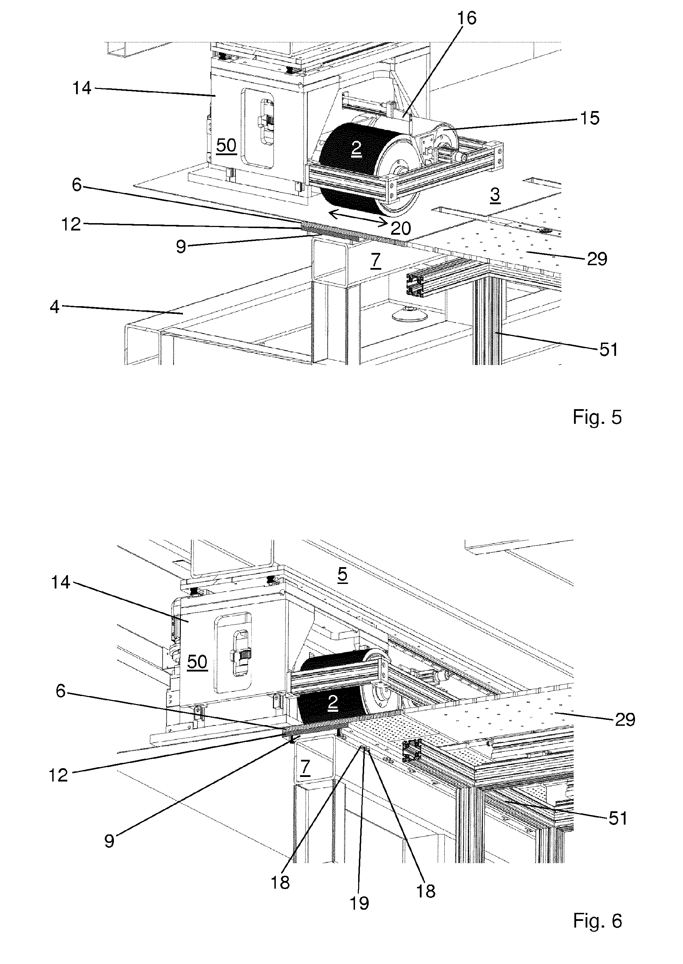

Beim Verfahren der Auftragseinheit 14 werden also nicht nur die Farbauftragswalze 2, sondern auch die Doktorwalze 15 und die Farbmixereinheit 16 entlang des Trägerbalkens 5 bewegt. Hierdurch können Farbstreifen auf der Glasplatte 1 aufgebracht werden, deren Breite der Breite 20 (vgl. Fig. 5) der Farbauftragswalze 2 entspricht, also typischerweise zwischen 100 mm und 500 mm, vorzugsweise 300 mm. Bei schmäleren Farbauftragsbreiten als die gesamte Breite 20 der Farbauftragswalze 2 wird die Glasplatte 1 auf der Auflagevorrichtung 3 unter der Farbauftragswalze 2 nur soweit positioniert, dass sich eine entsprechend der geforderten Farbauftragsbreite erforderliche Überlappung ergibt.

Muss eine Fläche mit einer größeren Breite als die Breite 20 der Farbauftragswalze 2 beschichtet werden, beginnt der erste Beschichtungsvorgang mit der vollen Breite 20 der Farbauftragswalze 2 in der Fläche. Danach wird die Glasplatte 1 durch die Transportriemen 30 zurück, d.h. vom Trägerbalken 5 weg, gezogen. Hierbei wird eine kleine Überlappung von ca. 5 mm bewusst belassen. Beispielsweise wird bei einer Farbauftragswalze 2 mit einer Breite 20 von 300 mm die Glasplatte 1 nur um 295 mm zurückgezogen, wodurch sich die besagte Farbüberlappung von ca. 5 mm ergibt.

Nun kann die Farbauftragswalze 2 neuerlich einen Farbauftrag durchführen, der die ganze Breite 20 der Farbauftragswalze 2 breit sein kann oder nur die restliche zu beschichtende Breite am Rand der Glasplatte 1. In letzterem Fall befindet sich die Farbauftragswalze 2 nicht mit ihrer gesamten Breite 20 sondern nur mit einem Teil ihrer Breite 20 während des Farbauftrags über der Glasplatte 1.

Zur Reinigung der Farbauftragswalze 2 und Doktorwalze 15 dient eine Reinigungswanne 36. Diese ist seitlich neben der Auflagevorrichtung 3 angeordnet und wird vom Trägerbalken 5 überdeckt, sodass die Auftragseinheit 14 über der Reinigungswanne 36 positioniert werden kann.

Zwischen Reinigungswanne 36 und der Auflagevorrichtung 3 ist eine Farbauftragsposition 43 für Kleinstscheiben vorgesehen, wo Glasplatten mit Abmessungen von weniger als 0,305 m x 0,305 m fixiert und mit der Farbauftragswalze 2 mit Farbe versehen werden können. Unabhängig davon, wo der Farbauftrag konkret erfolgt - sei es im Bereich der Auflagevorrichtung 3 oder im Bereich der Farbauftragsposition 43 für Kleinstscheiben -, erfolgt die Farbauftragung durch die Farbauftragswalze 2 stets entlang einer Farbauftragsrichtung 60.

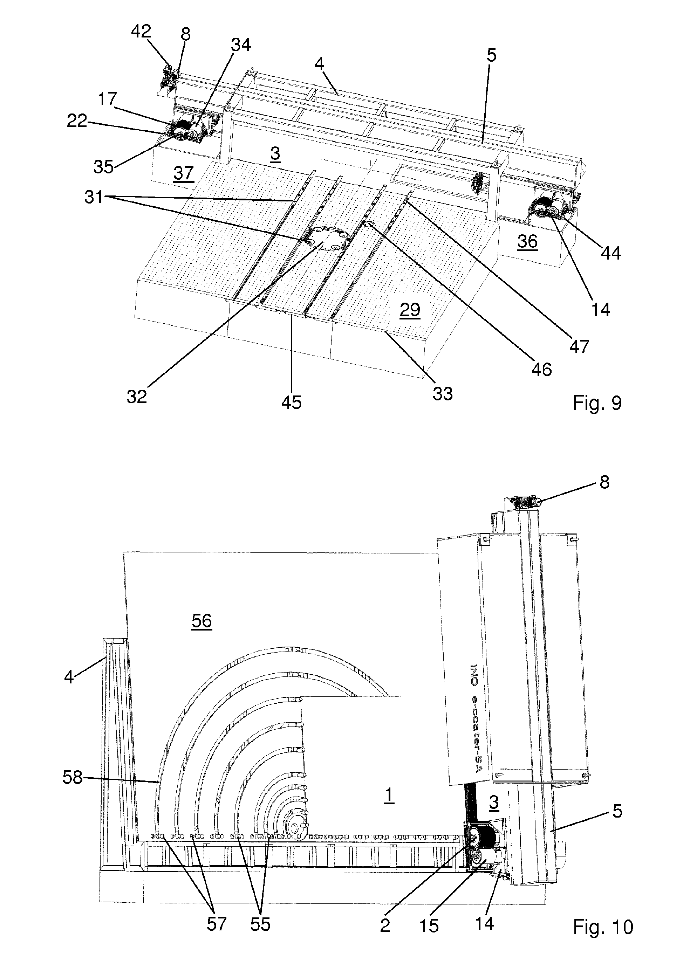

Wenn mehrere Farben aufgetragen werden sollen, kann eine zusätzliche Auftragseinheit 35 vorgesehen werden. Die zusätzliche Auftragseinheit 35 umfasst eine zusätzliche Farbauftragswalze 17 und eine zusätzliche Doktorwalze 34, wie in Fig. 9 dargestellt, vorzugsweise damit eine andere Farbe als mit der Auftragseinheit 14 aufgetragen werden kann. Auch die zusätzliche Auftragseinheit 35 kann mittels einer Motor/Getriebeeinheit 42 entlang des Trägerbalkens 5 verfahren werden, sodass die Farbauftragung völlig analog zur Auftragung mit der Auftragseinheit 14 erfolgen kann. Die Farbauftragung erfolgt mit der zusätzlichen Farbauftragswalze 17 ebenfalls in der Farbauftragsrichtung 60 der Farbauftragswalze 2. Sollen mehr als zwei Farben aufgetragen werden, können die Farbauftragswalze 2 und die Doktorwalze 15 in der Reinigungswanne 36 gereinigt und mit einer weiteren Farbe versehen werden, und gleichzeitig kann mit der zusätzlichen Auftragseinheit 35 eine andere Farbe aufgetragen werden. Sobald die Farbauftragung mit der zusätzlichen Auftragseinheit 35 beendet ist, kann die Auftragseinheit 14 übernehmen. Die zusätzliche Farbauftragswalze 17 und die zusätzliche Doktorwalze 34 können nun, falls erforderlich, ihrerseits in einer zusätzlichen Reinigungswanne 37 gereinigt und in der Folge mit einer weiteren Farbe versehen werden, und so fort. Dabei ist die zusätzliche Reinigungswanne 37 spiegelbildlich zur Reinigungswanne 36 angeordnet.

Falls sehr große Glasplatten 1 bearbeitet werden sollen, besteht die Gefahr, dass diese durch die Auflagevorrichtung 3 nicht hinreichend unterstützt werden und kippen können. Daher ist es insbesondere für sehr große Glasplatten 1, die beispielsweise Abmessengen von 6 m x 2,8 m oder noch größer aufweisen, von Vorteil, einen Zustelltisch 29 vorzusehen. Fig. 2 zeigt eine erfindungsgemäße Vorrichtung mit einem solchen Zustelltisch 29 in Aufsicht. Der Zustelltisch 29 schließt an die Auflagevorrichtung 3 bündig an, sodass Auflagevorrichtung 3 und Zustelltisch 29 eine ebene Fläche ausbilden. Um die Glasplatte 1 auf dieser Fläche leicht positionieren zu können, ist der Zustelltisch 29 vorzugsweise als Luftkissentisch ausgeführt, sodass die Glasplatte 1 auf einem Luftpolster über den Zustelltisch 29 gleiten kann. Entsprechend weist der Zustelltisch 29 Luftöffnungen 10 auf, aus denen Luft zur Ausbildung des Luftpolsters strömt.

Um auch größere Glasplatten 1 weit unter dem Trägerbalken 5 durchschieben zu können, ohne dass sich diese durchbiegen und brechen können, ist außerdem ein Tisch 48 vorgesehen, der ebenfalls bündig an die Auflagevorrichtung 3 anschließt und auf der dem Zustelltisch 29 gegenüberliegenden Seite, der Auslaufseite, angeordnet ist. Dieser Tisch 48 ist vorteilhafterweise ebenfalls als Luftkissentisch ausgeführt.

Um die Glasplatte 1 zunächst leichter auf den Zustelltisch 29 aufbringen zu können, weist der Zustelltisch 29 an seinem dem Trägerbalken 5 abgewandten Ende Rollen 45 als Aufgabehilfe auf. Sobald die Glasplatte 1 vollständig über dem Zustelltisch 29 liegt, kann sie vom Benutzer grob ausgerichtet werden. Hierzu kann zunächst ein mechanischer Anschlag 33 hochgefahren werden, an dem die Glasplatte 1 mit einer Kante manuell angelegt wird. Um die Glasplatte 1 noch besser manuell ausrichten zu können, ist an der Auftragseinheit 14 eine Lasereinheit 44 (vgl. Fig. 4) angeordnet, um eine optische Hilfslinie (nicht dargestellt) auf dem Zustelltisch 29 zu erzeugen. Die Lasereinheit 44 wird also mit der Auftragseinheit mit verfahren, sodass die Hilfslinie, die üblicherweise normal auf den mechanischen Anschlag 33 steht, von einer praktisch beliebigen Stelle entlang des Trägerbalkens 5 ausgehen kann. Der Benutzer kann nun eine weitere Kante der Glasplatte 1 entlang der Hilfslinie grob ausrichten, sodass die Glasplatte 1 möglichst mittig bezüglich der Drehplatte 32 zu liegen kommt. Außerdem kann die zusätzliche Auftragseinheit 35 eine zusätzliche Lasereinheit 22 (vgl. Fig. 9) aufweisen, die ebenfalls eine optische Hilfslinie (nicht dargestellt) auf dem Zustelltisch 29 erzeugen kann, um die Ausrichtung der Glasplatte 1 durch den Benutzer weiter zu erleichtern.

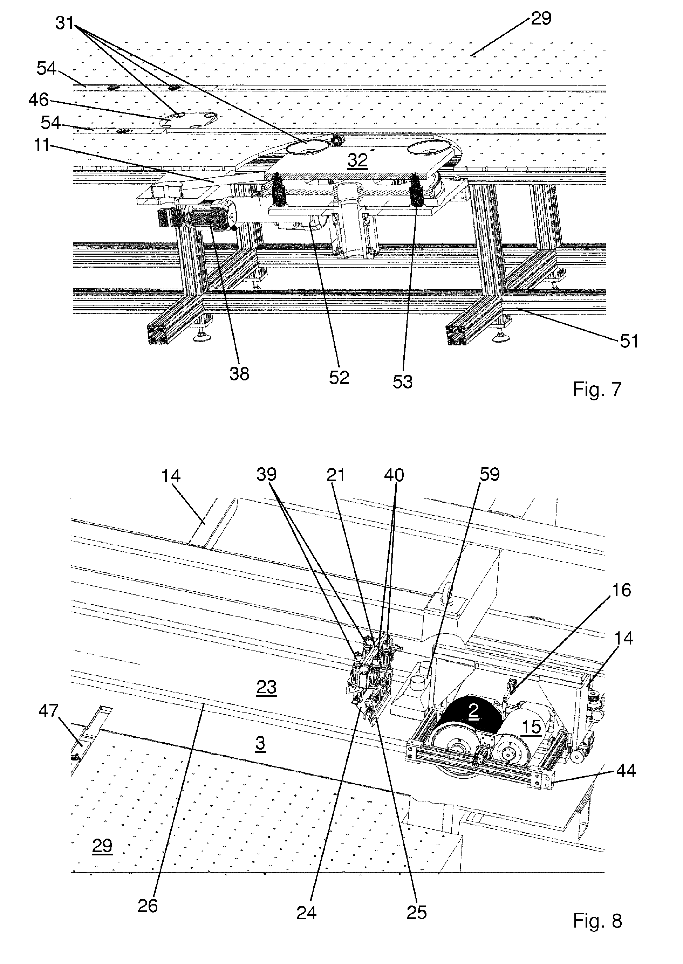

In weiterer Folge kann die Glasplatte 1 höchst präzise mit Hilfe von Transportriemen 30 linear auf den Trägerbalken 5 zu und von diesem weg verfahren werden. Hierzu sind an den Transportriemen 30 Saugelemente 31 angeordnet, um die Glasplatte 1 an den Förderbändern 30 zu fixieren. Die Saugelemente 31 sind dabei in Saugelementleisten 54 (vgl. insbesondere Fig. 7) montiert, die mittels Quetschverbindungen (nicht dargestellt) mit den Transportriemen 30 verbunden sind. Die Transportriemen 30 mit den Saugelementleisten 54 werden über eine Motor/Getriebeeinheit 52 (vgl. Fig. 7) gemeinsam bzw. synchron angetrieben.

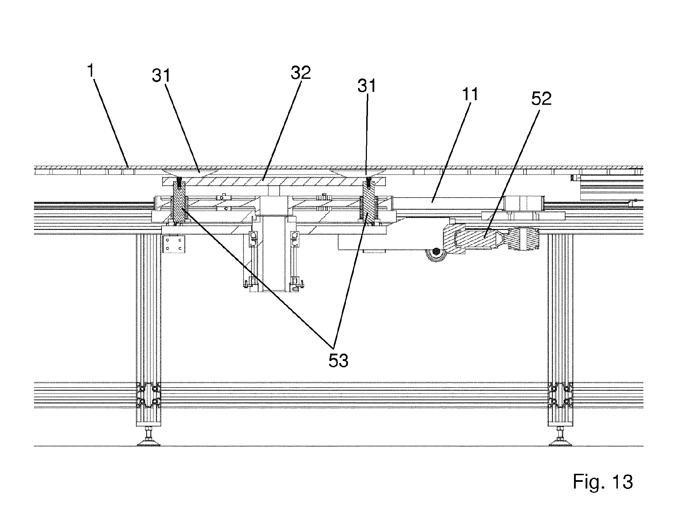

In der axonometrischen Ansicht der Fig. 3 ist eine Drehplatte 32 besonders gut erkennbar, die als Vorrichtung zur motorischen Präzisionsausrichtung der Glasplatte 1 auf dem Zustelltisch 29 dient. Die Drehplatte 32 weist zur Fixierung der Glasplatte 1 Saugelemente 31 auf und kann über einen Antriebsriemen 11 mittels einer Motor/Getriebeeinheit 38 um eine Drehachse gedreht werden, die wie eine Achse 27 (vgl. Fig. 3) normal auf die Auflagevorrichtung 3 normal steht; siehe auch Fig. 7, die eine axonometrische Schnittansicht gemäß der Schnittlinie A-A der Fig. 2 zeigt, wobei die Pfeile die Blickrichtung andeuten. Weiters ist in Fig. 7 ein Gestell 51 des Zustelltisches 29 erkennbar, welches den Zustelltisch 29 und seine Komponenten, wie z.B. die Drehplatte 32, deren Motor/Getriebeeinheit 38 etc., trägt. Schließlich zeigt Fig. 7 Pneumatikstempel 53, mittels derer die Drehplatte 32 samt der auf ihr angeordneten Saugelementen 31 sowie der mittels der Saugelemente 31 fixierten Glasplatte 1 angehoben werden kann, um in der Folge die Glasplatte 1 zu drehen. Dies geht aus Fig. 13 noch deutlicher hervor, die eine Schnittansicht gemäß der Schnittlinie A-A der Fig. 2 zeigt, wobei in diesem Fall die Blickrichtung gegen die Pfeilrichtung orientiert ist.

Um nach der manuellen Ausrichtung die Glasplatte 1 mittels der Drehplatte 32 automatisiert hochpräzise auszurichten, sind optische Sensoren 47 vorgesehen, die im gezeigten Ausführungsbeispiel in den Saugelementleisten 54 angeordnet sind. Da im gezeigten Ausführungsbeispiel die Transportriemen 30, wie gesagt, gemeinsam bzw. synchron angetrieben werden, ist die Ausrichtung der Sensoren 47 stets parallel zur Längsachse 28 des Trägerbalkens. Um nun beispielsweise eine Kante der Glasplatte 1 perfekt parallel zur Längsachse 28 des Trägerbalkens auszurichten, werden jene zwei Sensoren 47 verwendet, die an den beiden äußersten Transportriemen 30 angeordnet sind, welche von der Glasplatte 1 noch überdeckt werden. In der Fig. 2 sind das die beiden äußersten der vier Transportriemen 30.

Zunächst wird die Glasplatte 1 mit diesen Transportriemen 30 und den entsprechenden Saugelementen 31 über der Drehplatte 32 positioniert. Dabei soll der Mittelpunkt der Glasplatte 1 möglichst über der Drehachse der Drehplatte 32 zu liegen kommen, wobei hierfür die entsprechende manuelle Vororientierung unter Zuhilfenahme der mit der Lasereinheit 44 und/oder der zusätzlichen Lasereinheit 22 erzeugten Hilfslinie/n entscheidend ist. Anschließend werden die Saugelemente 31 der Drehplatte 32 aktiviert und die Saugelemente 31 an den Transportriemen 30 deaktiviert. Nun werden die besagten Sensoren 47 an den Transportriemen 30 in einer Positionierrichtung 61 (vgl. Fig. 2) in Richtung Trägerbalken 5 bewegt, bis die Sensoren 47 eine dem Trägerbalken 5 bzw. der Auflagevorrichtung 3 zugewandte Glasplattenkante 62 (vgl. Fig. 2) passieren. Sobald die Sensoren 47 diese Glasplattenkante 62 passiert haben, werden die Transportriemen 30 gestoppt und langsam mit einer definierten Positioniergeschwindigkeit gegen die Positionierrichtung 61 zurück gefahren. Erreichen nun beide Sensoren 47 gleichzeitig die Glasplattenkante 62, so bedeutet das, dass die Glasplattenkante 62 parallel zum Trägerbalken 5 bzw. zu dessen Längsachse 28 verläuft und für den Farbauftrag korrekt ausgerichtet ist. Bei einer Zeitdifferenz zwischen dem Erreichen der beiden Sensoren 47 muss die Glasplatte 1 mittels der Drehplatte 32 um einen Drehwinkel entsprechend gedreht werden, um die Ausrichtung der Glasplattenkante 62 zu verbessern, woraufhin die Ausrichtung wieder, wie eben beschrieben, überprüft wird, und so fort. Der Drehwinkel lässt sich bei bekanntem Abstand der beiden Sensoren 47 zueinander und gegebener Positioniergeschwindigkeit sofort berechnen.

Anschließend werden die Transportriemen 30 ein Stück, typischerweise 200 mm, von der Glasplattenkante 62 zurück, d.h. von dem Trägerbalken 5 bzw. der Auflagevorrichtung 3 weg, gefahren, und die Saugelemente 31 an den Transportriemen 30 saugen die Glasplatte 1 wieder an. Die Saugelemente 31 der Drehscheibe 32 werden gelöst. Somit kann die Glasplatte 1 für den Beschichtungsvorgang in Richtung Trägerbalken 5, unter die Auftragseinheit 14 verfahren werden. Schließlich kann zur besseren Fixierung der Glasplatte 1 während des Farbauftrags die Luftkissenfunktion des Zustelltischs 29 deaktiviert und stattdessen eine Saugfunktion aktiviert werden.

Die Drehplatte 32 erleichtert insbesondere das Ausrichten und Drehen von großformatigen Glasplatten 1 mit Abmessungen von bis zu 6 m x 2,8 m oder mehr. Für das Drehen von kleineren Glasplatten 1 mit Abmessungen zwischen typischerweise 1,2 m x 1,2 m und 0,305 m x 0,305 m weist der Zustelltisch 29 eine weitere, kleinere Drehplatte 46 auf, die vorzugsweise über dieselbe Motor/Getriebeeinheit 38 angetrieben wird wie die Drehplatte 32. Die weitere Drehplatte 46 ist zwischen einem äußersten Transportriemen 30 und einem in einer Richtung parallel zur Längsachse 28 gesehen darauf folgenden Transportriemen 30 angeordnet. Deren Abstand in einer Richtung parallel zur Längsachse 28 des Trägerbalkens 5 gemessen ist geringer als jener zwischen den zwei Transportriemen 30, zwischen denen die Drehplatte 32 positioniert ist. Darüber hinaus ist die weitere Drehplatte 46 näher zum Trägerbalken 5 bzw. zur Auflagefläche 3 positioniert, sodass sich eine Anordnung der weiteren Drehplatte 46 zwischen der Drehplatte 32 und der Auflagefläche 3 ergibt.

Der Einsatz der weiteren Drehscheibe 46 gestaltet sich beispielsweise, wie folgt: Nachdem die Glasplatte 1 manuell, wie oben beschrieben, ausgerichtet wurde, erfolgt die Fixierung der Glasplatte 1 durch die Saugelemente 31 in der Saugelementleiste 54, die mit jenem Transportriemen 30 verbunden ist, der zwischen der Drehplatte 32 und der weiteren Drehplatte 46 verläuft. Mit Hilfe dieses Transportriemens 30 wird die Glasplatte 1 mit ihrem Mittelpunkt möglichst über einer Drehachse der weiteren Drehplatte 46 positioniert, wobei die Drehachse parallel zur Achse 27 steht. Die weitere Drehplatte 46 übernimmt nun die Glasplatte 1, indem die Saugelemente 31 der weiteren Drehplatte 46 aktiviert werden. Nach dem Lösen der Saugelemente 31 in der Saugelementleiste 54 kann der Transportriemen 30 in Richtung Trägerbalken 5 gefahren werden, wobei der an der Saugelementleiste 54 angebrachte Sensor 47 die dem Trägerbalken 5 bzw. der Auflagevorrichtung 3 zugewandte Kante der Glasplatte 1 passiert. Hierdurch werden die Position der Glasplatte 1 und der notwendige Vorschub zur Positionierung der Glasplatte 1 für den Farbauftrag bestimmt. Nachdem die Saugelemente 31 in der Saugelementleiste 54 die Glasplatte 1 übernommen haben und die Saugelemente 31 in der weiteren Drehplatte 46 von der Glasplatte 1 gelöst sind, kann der weitere Transport der Glasplatte 1 erfolgen. Jetzt kann der Transportriemen 30 die Glasplatte 1 präzise zur Beschichtung unter der Auftragseinheit 14 positionieren. Müssen weitere Randbereiche der Glasplatte 1 beschichtet werden, wird die Glasplatte 1 zur weiteren Drehplatte 46 zurückgefahren, die Glasplatte 1 entsprechend gedreht und wieder für den nächsten Farbauftrag positioniert.

Um einen gut haftenden Farbauftrag zu gewährleisten, muss die Farbauftragswalze 2 mit einem gewissen Druck an die Glasplatte 1 angepresst werden. Entsprechend weist die Auflagevorrichtung 3 einen speziellen Gegenhalteabschnitt 6 auf, der in der Ausführungsform, wie sie z.B. in Fig. 3 dargestellt ist, flächenförmig ausgeführt ist. Fig. 5 und Fig. 6 zeigen hierzu eine axonometrische Detailansicht der Auftragseinheit 14, die über dem flächenförmigen Gegenhalteabschnitt 6 der Auflagevorrichtung 3 positioniert ist, sowie einen Schnitt durch den Gegenhalteabschnitt 6. Hierbei ist eine unter dem Gegenhalteabschnitt 6 angeordnete Segmentplatte 12 erkennbar, die in Richtung der Längsachse 28 des Trägerbalkens 5 aus mehreren Segmenten besteht. Die Segmentplatte 12 ist an einer Niveauausgleichsplatte 9, die an einem Profilrohr 7 angeschweißt ist, mit einem einstellbaren Abstand befestigt. Das Profilrohr 7 ist mit dem Rahmengerüst 4 verbunden und dient zur Unterstützung des Gegenhalteabschnitts 6.

In der Darstellung der Fig. 6 sind Justierschrauben 18 erkennbar, die in Gewinden der Niveauausgleichsplatte 9 aufgenommen sind und mittels derer der Abstand zwischen der Niveauausgleichsplatte 9 und der Segmente der Segmentplatte 12 eingestellt werden kann. Mittels Fixierschrauben 19 werden die Segmente der Segmentplatte 12 schließlich lagefixiert. Auf diese Weise garantiert die Segmentplatte 12 einen perfekt parallelen Verlauf des Gegenhalteabschnitts 6 zur linearen Bewegung der Farbauftragswalze 2, indem Unregelmäßigkeiten bzw. ein Verziehen der Rahmenkonstruktion 4 ausgeglichen werden können. Es wird hierdurch ein gleichmäßiger, korrekter Anpressdruck der Farbauftragswalze 2 an die Glasplatte 1 garantiert. Weiters wird die Glasplatte 1 vor etwaigen Biegebeanspruchungen geschützt.

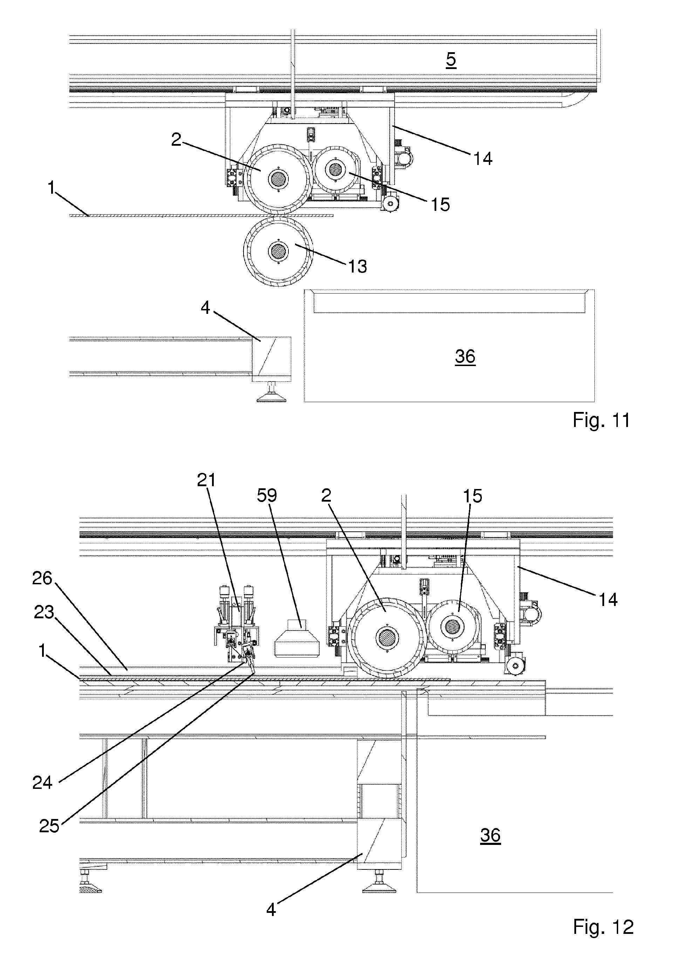

Fig. 11 zeigt als Alternative zum flächenförmigen Gegenhalteabschnitt 6 eine Gegenhalterolle 13 in einer Schnittansicht analog zur Schnittlinie B-B in Fig. 2, wobei die Pfeile die Blickrichtung andeuten. Die Gegenhalterolle 13 gewährleistet beim Farbauftragen durch die Farbauftragswalze 2 eine optimale Unterstützung der Glasplatte 1 und wird synchron mit der Farbauftragswalze 2 parallel zur Längsachse 18 des Trägerbalkens 5 bewegt. Die Gegenhalterolle 13 ist dabei in einer Ausnehmung (nicht dargestellt) der Auflagevorrichtung 3 angeordnet und im Rahmengerüst 4 verfahrbar gehalten.

Fig. 8 zeigt eine axonometrische Detailansicht einer Ausführungsform der erfindungsgemäßen Vorrichtung, bei welcher an der Auftragseinheit 14, genauer gesagt an einer Anschraubplatte 50 der Auftragseinheit 14 (vgl. Fig. 5 oder Fig. 6), mittels einer (nicht dargestellten) Halterung ein Rakelwerk 21 befestigt ist und mit der Auftragseinheit 14 mitbewegt werden kann. Auf diese Weise können auch komplexe Muster an beliebiger Stelle und auch großflächig auf der Glasplatte 1 Farbe mittels Siebdruck aufgebracht werden.

Das Rakelwerk 21 umfasst eine Flutrakel 24 zum Verteilen der Farbe auf einem Sieb 23, welches in einem Siebrahmen 26 montiert ist. Das Sieb 23 ist mit dem Siebrahmen 26 in eine Siebhalterung (nicht dargestellt), welche an der Rahmenkonstruktion 4 heb- und senkbar montiert ist, eingeschoben und gegenüber der Glasplatte 1 ausgerichtet. Weiters umfasst Das Rakelwerk 21 eine Druckrakel 25 zum Drucken der Farbe durch das Sieb 23 auf die Glasplatte 1. Die Flutrakel 24 wird über Pneumatikzylinder 39 bewegt, die Druckrakel 25 über Pneumatikzylinder 40. Indem die zu bedruckende Glasplatte 1 unter dem Sieb 23 verschoben wird, kann der Siebdruck an unterschiedlichen, beliebigen Stellen der Glasplatte 1 erfolgen.

Um aufgetragene Farbe rasch und ohne große Transportbewegungen der Glasplatte 1 trocknen zu können, kann eine Heizeinrichtung 59 an der Auftragseinheit 14 befestigt werden, wie in der Schnittansicht der Fig. 12 schematisch dargestellt ist. Die Heizeinrichtung 59 kann dabei zusätzlich oder alternativ zur Siebeinrichtung 21 an der Auftragseinheit 14 befestigt sein. Die Heizeinrichtung 59 wird mit der Auftragseinheit 14 in einem definierten Abstand - typischerweise 5 mm - linear über die Glasplatte bewegt werden. Die Vorschubgeschwindigkeit beträgt typischerweise zwischen 0,5 m/min und 3 m/min, vorzugsweise 1 m/min und hängt u.a. von der Dicke des zu trocknenden Farbauftrags ab. Die Breite der Heizeinrichtung 59 entspricht dabei der Breite 20 der Farbauftragswalze 2, typischerweise 300 mm. Aus der Heizeinrichtung 59 wird heiße Luft mit typischerweise 200°C bis 300°C in Richtung der Glasplatte 1 geblasen. Auf diese Weise kann beispielsweise eine aufgetragene Schicht vor dem eigentlichen Emaillierungsschritt, der bei weit höheren Temperaturen erfolgt, vorgetrocknet werden. Die Heizvorrichtung 59 kann auch bei einem geforderten Auftrag von zwei verschiedenen Farben von großem Vorteil sein, denn bei einem Einsatz von zwei Auftragseinheiten 14, 35 und der Heizvorrichtung 59 können auch zwei verschiedene Farben praktisch unmittelbar hintereinander aufgetragen werden.

Fig. 10 zeigt schließlich eine Ausführungsvariante, in welcher die Vorrichtung aufgekantet angeordnet ist. Der Trägerbalken 5 schließt hierbei mit der Horizontalen einen Winkel von etwas weniger als 90° ein, typischerweise 75° oder 84°, da Glasplatten 1 gerne unter solchen Winkeln aufgekantet transportiert werden. Unabhängig hiervon fährt die Auftragseinheit 14 mit der Farbauftragswalze 2, der Doktorwalze 15 und der Farbmixereinheit 16 beim Farbauftragen entlang des Trägerbalkens 5. Entsprechend ist das Rahmengerüst 4 so ausgeführt, dass es neben dem Trägerbalken 5 eine an sich bekannte Luftkissenrückwand 56 unter demselben Winkel wie den Trägerbalken 5 fixiert.

Die Glasplatte 1 wird über Transportrollen 57 in Richtung Auflagevorrichtung 3 unter die Farbauftragswalze 2 bewegt. Soll der Farbauftrag entlang unterschiedlicher Kanten der Glasplatte 1 erfolgen, so wird die Glasplatte 1 von der Auflagevorrichtung 3 mittels der Transportrollen 57 retour gefahren und an der Luftkissenrückwand 56 entsprechend gedreht. Hierzu weist die Luftkissenrückwand 56 kreisbogenförmige Führungen 58 auf, in welchen Schwenkfüße 55 angeordnet sind. Die Schwenkfüße 55 werden in den Führungen 58 verfahren und drehen dabei die Glasplatte 1 um 90°. Reicht diese Drehung aus, kann die Glasplatte 1 wieder auf die Auflagevorrichtung 3 zu gefahren und der entsprechende Rand mit Farbe beschichtet werden. Ist hingegen eine Drehung um 180° gewünscht, wird die Glasplatte 1 nach der ersten Drehung um 90° wieder von der Auflagevorrichtung 3 mittels der Transportrollen 57 weggefahren und erneut um 90° gedreht, worauf die Farbauftragung erfolgen kann.

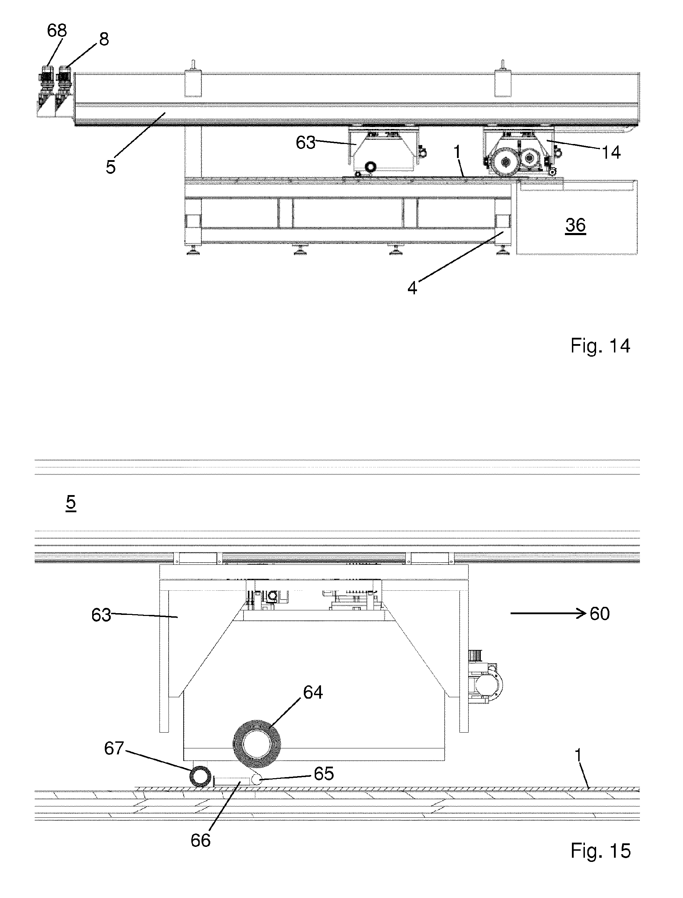

In der Seitenansicht der Fig. 14 ist eine alternative Ausführungsform dargestellt, welche neben der Auftragseinheit 14 eine Abklebevorrichtung 63 umfasst. Die Abklebevorrichtung 63 ist im gezeigten Beispiel am selben Trägerbalken 5 verfahrbar angeordnet, d.h. die Farbauftragsrichtung 60 stellt gleichzeitig auch die lineare Bewegungsrichtung der Abklebevorrichtung 63 dar. Für das Verfahren bzw. Bewegen der Abklebevorrichtung 63 dient eine Motor/Getriebeeinheit 68 als Antrieb.

Fig. 15 zeigt eine vergrößerte Darstellung der Abklebevorrichtung 63 der Fig. 14. Ein Klebeband 64 wird von einer Rolle abgerollt und über eine Umlenkrolle 65 auf die Glasplatte 1 aufgebracht. An die Umlenkrolle 65 schließt gegen die Bewegungsrichtung gesehen eine Führungseinheit 66 mit einem Schnittwerkzeug an. Einerseits dient die Führungseinheit 66 zur genauen Ausrichtung des Klebebands 64, andererseits kann mit dem Schnittwerkzeug das Klebeband 64 abgeschnitten werden, um Streifen definierter Länge zu erhalten.

Gegen die Bewegungsrichtung gesehen hinter der Führungseinheit 66 ist eine Anpressrolle 67 angeordnet. Diese drückt das Klebeband 64 gegen die Oberfläche der Glasplatte 1 und bewirkt eine Glättung des Klebebands 64, sodass Luftblasen bzw. Lufteinschlüsse zwischen Klebeband 64 und Glasplatte 1 vermieden werden. Wird hierauf die Glasplatte 1 nach der Auftragung des Klebebands 64 beispielsweise mittels eines im Vakuum bzw. bei Unterdruck stattfindenden Sputterprozesses mit einer dünnen Metallschicht versehen, so sind keine Lufteinschlüsse bzw. Luftblasen vorhanden, die sich aufgrund des Unterdrucks ausdehnen und zum Ablösen des Klebebands 64 führen könnten.

Völlig analog zum Auftragen von Farbe mittels der Farbauftragswalze 2, die eine gewisse Breite 20 aufweist, können auch mehrere Streifen des Klebebands 64 überlappend und/oder nebeneinander aufgebracht werden. Somit können Bereiche auf der Oberfläche der Glasplatte 1 mit Klebeband 64 abgedeckt werden, die breiter als die Breite des Klebebands 64 sind. Typische Breiten des Klebebands 64 sind zwischen 10 mm und 80 mm, wobei dazwischen beliebige Abstufungen in Millimeterschritten handelsüblich sind.

Je nach Breite des Klebebands 64 ist es möglich, einen definierten Überstand des Klebebands 64 über den Rand der Glasplatte 1 vorzusehen. Dies ist insbesondere dann sinnvoll, wenn das Klebeband 64 in einem folgenden Bearbeitungsschritt über den Rand der Glasplatte 1 abgerollt und auf der Stirnseite der Glasplatte 1, die gemeinsam mit der Oberfläche der Glasplatte 1 an den Rand der Glasplatte 1 anschließt, festgedrückt werden soll.

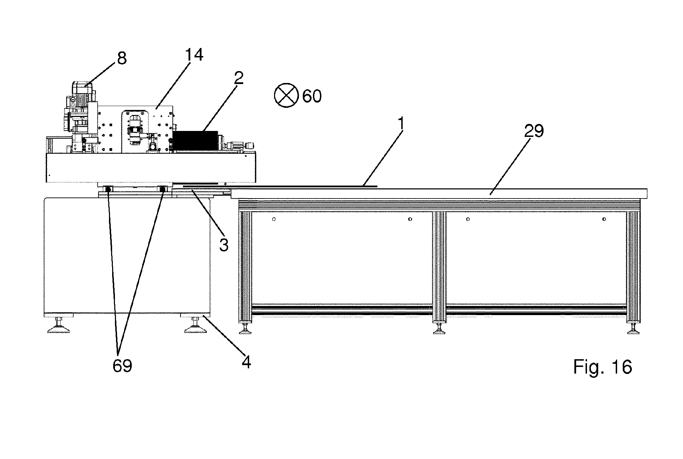

Fig. 16 schließlich zeigt eine Seitenansicht einer weiteren Ausführungsvariante der erfindungsgemäßen Vorrichtung. In diesem Fall ist die Auftragseinheit 14 entlang von Führungsschienen 69 verfahrbar angeordnet, wobei der Antrieb wieder über die Motor/Getriebeeinheit 8 erfolgt. Die Farbauftragsrichtung 60 steht in der Fig. 16 normal auf die Zeichenebene und weist in diese hinein. Generell sei zu allen gezeigten Ausführungsbeispielen bemerkt, dass selbstverständlich auch die entgegengesetzte Richtung eine mögliche Richtung für die Farbauftragung bzw. Klebebandauftragung ist.

Die Führungsschienen 69 sind in der Rahmenkonstruktion 4 gehalten und verlaufen im gezeigten Beispiel parallel zu einer Stirnseite des Zustelltischs 29. Die Glasplatte 1 wird über den Zustelltisch 29 auf einem Luftpolster unter die Farbauftragswalze 2 und über die Auflagevorrichtung 3 geschoben. Im Gegensatz zu jenen Ausführungsvarianten, bei welchen ein zur Auflagevorrichtung 3 beabstandet verlaufender Trägerbalken 5 vorgesehen ist, kann die Glasplatte 1 im Ausführungsbeispiel der Fig. 16 nicht vollständig unter der Farbauftragswalze 2 hindurch geschoben werden. Stattdessen kann die Glasplatte 1 maximal soweit unter der Farbauftragswalze 2 verschoben werden, bis die Glasplatte 1 an die nächstgelegene Führungsschiene 69 stößt. In der Praxis sind zumeist Anschläge (nicht dargestellt) vorgesehen, die das Verschieben der Glasplatte 1 in Richtung Führungsschienen 69 schon etwas früher begrenzen. Die Ausführungsvariante der Fig. 16 eignet sich somit vor allem zum Auftragen von Farbe im Randbereich der Oberfläche der Glasplatte 1. Ansonsten verläuft das Aufbringen der Farbe völlig analog zum oben geschilderten Aufbringen bei Vorhandensein eines Trägerbalkens 5.

Selbstverständlich kann auch im Falle der Ausführungsvariante mit Führungsschienen 69 zusätzlich zur Auftragseinheit 14 eine Abklebevorrichtung 63 vorgesehen sein, die ihrerseits entlang der Führungsschienen 69 verfahren werden kann (nicht dargestellt). Dies erlaubt das Aufbringen von Streifen des Klebebands 1 auf die Oberfläche der Glasplatte 1, insbesondere im Bereich des Rands der Oberfläche der Glasplatte 1.

### BEZUGSZEICHENLISTE

1 Glasplatte
2 Farbauftragswalze
3 Auflagevorrichtung
4 Rahmenkonstruktion
5 Trägerbalken
6 Gegenhalteabschnitt
7 Profilrohr
8 Motor/Getriebeeinheit für Bewegung der Auftragseinheit
9 Niveauausgleichsplatte
10 Luftöffnung
11 Antriebsriemen
12 Segmentplatte
13 Gegenhalterolle
14 Auftragseinheit
15 Doktorwalze
16 Farbmixereinheit
17 Zusätzliche Farbauftragswalze
18 Justierschraube
19 Fixierschraube
20 Breite der Farbauftragswalze
21 Rakelwerk
22 Zusätzliche Lasereinheit
23 Sieb
24 Flutrakel
25 Druckrakel
26 Siebrahmen
27Achse normal auf die Auflagevorrichtung
28 Längsachse des Trägerbalkens
29 Zustelltisch
30 Transportriemen
31 Saugelement
32 Drehplatte
33 Anschlag
34 Zusätzliche Doktorwalze
35 Zusätzliche Auftragseinheit
36 Reinigungswanne
37 Zusätzliche Reinigungswanne
38 Motor/Getriebeeinheit für Drehplatte
39 Pneumatikzylinder für die Flutrakel
40 Pneumatikzylinder für die Druckrakel
41 Energiekette
42 Motor für Bewegung der zusätzlichen Auftragseinheit
43 Farbauftragsposition für Kleinstscheiben
44 Lasereinheit
45 Rollen als Aufgabehilfe
46 Weitere Drehplatte für kleinere Scheiben
47 Optischer Sensor
48 Tisch auf Auslaufseite
49 Transporthaken
50 Anschraubplatte
51 Gestell des Zustelltisches
52 Motor/Getriebeeinheit für Transportriemen
53 Pneumatikstempel
54 Saugelementleiste
55 Schwenkfuß für Glasdrehbewegung
56 Luftkissenrückwand
57 Transportrolle
58 Führung
59 Heizeinrichtung
60 Farbauftragsrichtung
61 Positionierrichtung
62 Glasplattenkante
63 Abklebevorrichtung
64 Klebeband
65 Umlenkrolle
66 Führungseinheit mit Schnittwerkzeug
67 Anpressrolle
68 Motor/Getriebeeinheit für Bewegung der Abklebevorrichtung
69 Führungsschiene

## Patentansprüche

1. Farbauftragsvorrichtung für eine Glasplatte (1), wobei die Vorrichtung eine Auflagevorrichtung (3) für die beim Farbauftrag unbewegt auf dieser aufliegende Glasplatte (1) umfasst sowie zumindest eine Farbauftragswalze (2) zur Farbauftragung auf die Glasplatte (1), wobei die Farbauftragswalze (2) in einer Rahmenkonstruktion (4) gehalten und relativ zur Rahmenkonstruktion (4) verfahrbar ist und die Farbauftragswalze (2) mit einer Doktorwalze (15) zusammenarbeitet, um Farbe auf die Farbauftragswalze (2) mit einer gewünschten Dicke aufzutragen.

2. Vorrichtung nach Anspruch 1, **dadurch gekennzeichnet, dass** zumindest ein in der Rahmenkonstruktion (4) gehaltener, zur Auflagevorrichtung (3) beabstandet verlaufender Trägerbalken (5) oder zumindest eine in der Rahmenkonstruktion (4) gehaltene Führungsschiene (69) vorgesehen sind, entlang welchen die Farbauftragswalze (2) verfahrbar angeordnet ist.

3. Vorrichtung nach einem der Ansprüche 1 bis 2, **dadurch gekennzeichnet, dass** die Auflagevorrichtung (3) einen flächenförmigen Gegenhalteabschnitt (6) aufweist, gegen welchen die Farbauftragswalze (2) unter Zwischenlage der Glasplatte (1) pressbar ist.

4. Vorrichtung nach einem der Ansprüche 1 bis 3, **dadurch gekennzeichnet, dass** die Auflagevorrichtung (3) eine Ausnehmung aufweist, in welcher eine Gegenhalterolle (13) angeordnet ist, dass die Gegenhalterolle in der Rahmenkonstruktion (4) synchron zur Farbauftragswalze (2) verfahrbar gehalten ist und dass die Farbauftragswalze (2) unter Zwischenlage der Glasplatte (1) gegen die Gegenhalterolle (13) pressbar ist.

5. Vorrichtung nach einem der Ansprüche 2 bis 4, **dadurch gekennzeichnet, dass** eine Auftragseinheit (14) vorgesehen ist, welche zumindest die Farbauftragswalze (2), die mit dieser zusammenarbeitende Doktorwalze (15) sowie eine Farbmixereinheit (16) umfasst und welche Auftragseinheit (14) entlang des mindestens einen Trägerbalkens (5) oder der mindestens einen Führungsschiene (69) verfahrbar angeordnet ist.

6. Vorrichtung nach einem der Ansprüche 2 bis 5 **dadurch gekennzeichnet, dass** eine zusätzliche Farbauftragswalze (17) in der Rahmenkonstruktion (4) verfahrbar gehalten ist, wobei die zusätzliche Farbauftragswalze (17) vorzugsweise Teil einer zusätzlichen Auftragseinheit (35) ist und die zusätzliche Auftragseinheit (35) weiters eine zusätzliche Doktorwalze (34) umfasst und entlang des mindestens einen Trägerbalkens (5) oder der mindestens einen Führungsschiene (69) verfahrbar angeordnet ist.

7. Vorrichtung nach einem der Ansprüche 5 bis 6, sofern abhängig von Anspruch 5, **dadurch gekennzeichnet, dass** an der Auftragseinheit (14) ein Rakelwerk (21) befestigt ist, welches mit der Auftragseinheit (14) verfahrbar ist und welches eine Flutrakel (24) und/oder eine Druckrakel (25) umfasst.

8. Vorrichtung nach einem der Ansprüche 5 bis 7, sofern abhängig von Anspruch 5, **dadurch gekennzeichnet, dass** an der Auftragseinheit (14) eine Heizeinrichtung (59) befestigt ist, welche mit der Auftragseinheit (14) verfahrbar ist.

9. Vorrichtung nach einem der Ansprüche 2 bis 8, sofern abhängig von Anspruch 2, **dadurch gekennzeichnet, dass** die Farbauftragswalze (2) um eine auf die Auflagevorrichtung (3) normal stehende Achse (27) verdrehbar ist und dass die Farbauftragswalze (2) in einer Richtung normal auf eine Längsachse (28) des Trägerbalkens (5) verfahrbar ist, vorzugsweise gemeinsam mit dem Trägerbalken (5).

10. Vorrichtung nach einem der Ansprüche 1 bis 9, **dadurch gekennzeichnet, dass** ein Zustelltisch (29) vorgesehen ist, an welchen die Auflagevorrichtung (3) bündig anschließt oder von welchem die Auflagevorrichtung (3) einen Abschnitt bildet, wobei der Zustelltisch (29) vorzugsweise als Luftkissentisch ausgebildet ist.

11. Vorrichtung nach Anspruch 10, **dadurch gekennzeichnet, dass** der Zustelltisch (29) zumindest zwei Transportriemen (30) aufweist, um die Glasplatte (1) linear zu bewegen, wobei an den Transportriemen (30) Saugelemente (31) angeordnet sind, um die Glasplatte (1) zu fixieren.

12. Vorrichtung nach einem der Ansprüche 10 bis 11, **dadurch gekennzeichnet, dass** der Zustelltisch (29) eine Drehplatte (32) aufweist, welche um eine Achse (27) normal auf die Auflagevorrichtung (3) drehbar ist und an welcher Drehplatte (32) Saugelemente (31) zur Fixierung der Glasplatte (1) angeordnet sind.

13. Vorrichtung nach Anspruch 12, **dadurch gekennzeichnet, dass** der Zustelltisch (29) eine weitere Drehplatte (46) aufweist, die zwischen der Drehplatte (32) und der Auflagefläche (3) angeordnet ist, wobei zwischen der Drehplatte (32) und der weiteren Drehplatte (46) zumindest ein Transportriemen (30) verläuft, an welchem Saugelemente (31) angeordnet sind.

14. Verfahren zum Auftragen von Farbe auf eine Glasplatte (1), wobei das Verfahren die folgenden Schritte umfasst:
- Ausrichten der Glasplatte (1) zu einer linearen Bewegungsrichtung (60) einer Farbauftragswalze (2);
- Positionieren der ausgerichteten Glasplatte (1) zwischen einer Auflagevorrichtung (3) und der Farbauftragswalze (2), wobei die Farbauftragswalze (2) mit einer Breite (20) zumindest teilweise mit der Glasplatte (1) überlappt;
- Lagefixieren der Glasplatte (1) ;
- Positionieren der Farbauftragswalze (2) entlang der linearen Bewegungsrichtung (60) oder gegen die lineare Bewegungsrichtung (60);
- Pressen der Farbauftragswalze (2) gegen die Glasplatte (1 - Bewegen der Farbauftragswalze (2) entlang der linearen Bewegungsrichtung (60).

15. Verfahren nach Anspruch 14, **dadurch gekennzeichnet, dass** das Ausrichten der Glasplatte (1) die folgenden Schritte umfasst:
- Synchrones Bewegen von zwei optischen oder mechanischen Sensoren (47), die parallel zur linearen Bewegungsrichtung (60) in einem bekannten Abstand zueinander angeordnet sind, in einer Positionierrichtung (61), die in Richtung der Farbauftragswalze (2) weist und normal auf die lineare Bewegungsrichtung (60) steht, bis beide Sensoren (47) eine der Auflagevorrichtung (3) zugewandte Kante (62) der Glasplatte (1) passiert haben;
- Synchrones Bewegen der beiden Sensoren (47) mit einer definierten Positioniergeschwindigkeit gegen die Positionierrichtung (61);
- Messung der Zeitdifferenz zwischen dem erneuten Erreichen der Kante (62) durch die beiden Sensoren (47);
- Berechnung eines Drehwinkels;
- Drehung der Glasplatte (1) um den Drehwinkel.

## Claims

1. Paint application device for a glass plate (1), wherein the device comprises a supporting device (3) for the glass plate (1) which rests immovably on this during the paint application as well as at least one paint application roller (2) for application of paint to the glass plate (1), wherein the paint application roller (2) is held in a frame structure (4) and is movable relative to the frame structure (4) and the paint application roller (2) cooperates with a doctor roller (15) in order to apply paint onto the paint application roller (2) with a desired thickness.

2. The device according to claim 1, **characterized in that** at least one carrier beam (5) which is held in the frame structure (4) and which runs at a distance from the supporting device (3) or at least one guide rail (69) which is held in the frame structure (4) are provided, along which the paint application roller (2) is disposed displaceably.

3. The device according to any one of claims 1 to 2, **characterized in that** the supporting device (3) has a planar counter-holding section (6) against which the paint application roller (2) can be pressed with the glass plate (1) interposed.

4. The device according to any one of claims 1 to 3, **characterized in that** the supporting device (3) has a recess in which a counter-holding roller (13) is disposed, that the counter-holding roller is held displaceably in the frame structure (4) synchronous to the paint application roller (2) and that the paint application roller (2) can be pressed against the counter-holding roller (13) with the glass plate (1) interposed.

5. The device according to any one of claims 2 to 4, **characterized in that** an application unit (14) is provided which comprises at least the paint application roller (2), the doctor roller (15) cooperating with this, and a paint mixer unit (16) and which application unit (14) is disposed displaceably along the at least one carrier beam (5) or the at least one guide rail (69).

6. The device according to any one of claims 2 to 5, **characterized in that** an additional paint application roller (17) is held displaceably in the frame structure (4), wherein the additional paint application roller (17) is preferably part of an additional application unit (35) and the additional application unit (35) further comprises an additional doctor roller (34) and is disposed displaceably along the at least one carrier beam (5) or the at least one guide rail (69).

7. The device according to any one of claims 5 to 6, if dependent on claim 5, **characterized in that** a squeegee (21) is fastened to the application unit (14) which is displaceable with the application unit (14) and which comprises a floodbar (24) and/or a printing squeegee (25).

8. The device according to any one of claims 5 to 7, if dependent on claim 5, **characterized in that** a heating device (59) is fastened to the application unit (14) which is displaceable with the application unit (14).

9. The device according to any one of claims 2 to 8, if dependent on claim 2, **characterized in that** the paint application roller (2) can be twisted about an axis (27) which stands normally on the supporting device (3) and that the paint application roller (2) is displaceable in a direction normally onto a longitudinal axis (28) of the carrier beam (5), preferably jointly with the carrier beam (5).

10. The device according to any one of claims 1 to 9, **characterized in that** a feed table (29) is provided which is adjoined flush by the supporting device (3) or of which the supporting device (3) forms a section, wherein the feed table (29) is preferably configured as an air cushion table.

11. The device according to claim 10, **characterized in that** the feed table (29) has at least two conveyor belts (30) in order to linearly move the glass plate (1), wherein suction elements (31) are disposed on the conveyor belts (30) in order to fix the glass plate (1).

12. The device according to any one of claims 10 to 11, **characterized in that** the feed table (29) comprises a rotary plate (32) which is rotatable about an axis (27) normal to the supporting device (3) and on which rotary plate (32) suction elements (31) are provided for fixing the glass plate (1).

13. The device according to claim 12, **characterized in that** the feed table (29) has a further rotary plate (46) which is disposed between the rotary plate (32) and the supporting surface (3), wherein at least one conveyor belt (30) runs between the rotary plate (32) and the further rotary plate (46), on which suction elements (31) are disposed.

14. Method for application of paint to a glass plate (1), wherein the method comprises the following steps:
- aligning the glass plate (1) to a linear direction of movement (60) of a paint application roller (2);
- positioning the aligned glass plate (1) between a supporting device (3) and the paint application roller (2), wherein the paint application roller (2) with a width (20) overlaps with the glass plate (1) at least partially;
- fixing the glass plate (1) in position;
- positioning the paint application roller (2) along the linear direction of movement (60) or contrary to the linear direction of movement (60);
- pressing the paint application roller (2) against the glass plate (1);
- moving the paint application roller (2) along the linear direction of movement (60).

15. The method according to claim 14, **characterized in that** the alignment of the glass plate (1) comprises the following steps:
- synchronous movement of two optical or mechanical sensors (47) which are disposed parallel to the linear direction of movement (60) at a known distance from one another, in a positioning direction (61) which points in the direction of the paint application roller (2) and is normal to the linear direction of movement (60), until both sensors (47) have passed an edge (62) of the glass plate (1) facing the supporting device (3);
- synchronous movement of the two sensors (47) at a defined positioning speed contrary to the positioning direction (61);
- measurement of the time difference between the renewed reaching of the edge (62) by the two sensors (47) ;
- calculation of an angle of rotation;
- turning the glass plate (1) through an angle of rotation.

## Revendications

1. Dispositif d'application de couleur pour un panneau de verre (1), lequel dispositif comprend un dispositif d'appui (3) pour le panneau de verre (1) qui repose sans se déplacer sur celui-ci pendant l'application de couleur et au moins un rouleau applicateur de couleur (2) pour appliquer la couleur sur le panneau de verre (1), le rouleau applicateur de couleur (2) étant retenu dans une construction de cadre (4) et pouvant se déplacer par rapport à la construction de cadre (4) et le rouleau applicateur de couleur (2) coopérant avec un rouleau doseur (15) pour appliquer de la couleur sur le rouleau applicateur de couleur (2) sur une épaisseur souhaitée.

2. Dispositif selon la revendication 1, **caractérisé en ce qu'**il est prévu au moins une barre de support (5) retenue dans la construction de cadre (4) et passant à distance du dispositif d'appui (3) ou au moins un rail de guidage (69) retenu dans la construction de cadre (4), le long desquels le rouleau applicateur de couleur (2) est disposé avec possibilité de déplacement.

3. Dispositif selon l'une des revendications 1 à 2, **caractérisé en ce que** le dispositif d'appui (3) présente une partie de maintien opposée de forme plate (6), contre laquelle le rouleau applicateur de couleur (2) peut être pressé en interposant le panneau de verre (1).

4. Dispositif selon l'une des revendications 1 à 3, **caractérisé en ce que** le dispositif d'appui (3) présente un évidement dans lequel un rouleau de maintien opposé (13) est disposé, **en ce que** le rouleau de maintien opposé est retenu dans la construction de cadre (4) de façon à pouvoir se déplacer de façon synchrone par rapport au rouleau applicateur de couleur (2) et **en ce que** le rouleau applicateur de couleur (2) peut être pressé contre le rouleau de maintien opposé (13) en interposant le panneau de verre (1).

5. Dispositif selon l'une des revendications 2 à 4, **caractérisé en ce qu'**il est prévu une unité d'application (14) qui comprend au moins le rouleau applicateur de couleur (2), le rouleau doseur (15) coopérant avec celui-ci ainsi qu'une unité de mélange de la couleur (16), laquelle unité d'application (14) est disposée avec possibilité de déplacement le long de l'au moins une barre de support (5) ou de l'au moins un rail de guidage (69).

6. Dispositif selon l'une des revendications 2 à 5 **caractérisé en ce qu'**un rouleau applicateur de couleur supplémentaire (17) est retenu avec possibilité de se déplacer dans la construction de cadre (4), le rouleau applicateur de couleur supplémentaire (17) faisant de préférence partie d'une unité d'application supplémentaire (35) et l'unité d'application supplémentaire (35) comprenant en outre un rouleau doseur supplémentaire (34) et étant disposée avec possibilité de déplacement le long de l'au moins une barre de support (5) ou de l'au moins un rail de guidage (69).

7. Dispositif selon l'une des revendications 5 à 6 dépendant de la revendication 5, **caractérisé en ce qu'**est fixé sur l'unité d'application (14) un ensemble de racles (21) qui peut se déplacer avec l'unité d'application (14) et qui comprend une contre-racle (24) et/ou une racle d'impression (25).

8. Dispositif selon l'une des revendications 5 à 7 dépendant de la revendication 5, **caractérisé en ce qu'**est fixé sur l'unité d'application (14) un dispositif de chauffage (59) qui peut se déplacer avec l'unité d'application (14).

9. Dispositif selon l'une des revendications 2 à 8 dépendant de la revendication 2, **caractérisé en ce que** le rouleau applicateur de couleur (2) peut tourner autour d'un arbre (27) qui se tient perpendiculairement sur le dispositif d'appui (3) et **en ce que** le rouleau applicateur de couleur (2) peut se déplacer dans une direction perpendiculaire à un axe longitudinal (28) de la barre de support (5), de préférence avec la barre de support (5).

10. Dispositif selon l'une des revendications 1 à 9, **caractérisé en ce qu'**il est prévu un plateau d'avancement (29) auquel le dispositif d'appui (3) se raccorde de niveau ou dont le dispositif d'appui (3) forme une partie, lequel plateau d'avancement (29) est de préférence conçu comme un plateau sur coussin d'air.

11. Dispositif selon la revendication 10, **caractérisé en ce que** le plateau d'avancement (29) présente au moins deux courroies de transport (30) pour déplacer le panneau de verre (1) de façon linéaire, des éléments à aspiration (31) étant prévus sur les courroies de transport (30) pour fixer le panneau de verre (1).

12. Dispositif selon l'une des revendications 10 à 11, **caractérisé en ce que** le plateau d'avancement (29) présente une plaque tournante (32) qui peut tourner autour d'un axe (27) perpendiculaire sur le dispositif d'appui (3), des éléments à aspiration (31) étant prévus sur la plaque tournante (32) pour fixer le panneau de verre (1).

13. Dispositif selon la revendication 12, **caractérisé en ce que** le plateau d'avancement (29) présente une autre plaque tournante (46) qui est disposée entre la plaque tournante (32) et la surface d'appui (3), au moins une courroie de transport (30) sur laquelle sont disposés des éléments à aspiration (31) étant disposée entre la plaque tournante (32) et l'autre plaque tournante (46).

14. Procédé pour l'application de couleur sur un panneau de verre (1), lequel procédé comprend les étapes suivantes :
- orientation du panneau de verre (1) dans un sens de déplacement linéaire (60) d'un rouleau applicateur de couleur (2) ;
- positionnement du panneau de verre (1) orienté entre un dispositif d'appui (3) et le rouleau applicateur de couleur (2),
le rouleau applicateur de couleur (2) chevauchant au moins en partie le panneau de verre (1) sur une largeur (20) ;
- fixation de la position du panneau de verre (1) ;
- positionnement du rouleau applicateur de couleur (2) dans le sens de déplacement linéaire (60) ou en sens inverse du sens de déplacement linéaire (60) ;
- appui du rouleau applicateur de couleur (2) contre le panneau de verre (1) ;
- déplacement du rouleau applicateur de couleur (2) dans le sens de déplacement linéaire (60).

15. Procédé selon la revendication 14, **caractérisé en ce que** l'orientation du panneau de verre (1) comprend les étapes suivantes :
- déplacement synchrone de deux capteurs (47) optiques ou mécaniques, disposés à une distance connue l'un de l'autre parallèlement au sens de déplacement linéaire (60), dans un sens de positionnement (61) qui est dirigé vers le rouleau applicateur de couleur (2) et perpendiculaire au sens de déplacement linéaire (60), jusqu'à ce que les deux capteurs (47) franchissent un bord (62) du panneau de verre (1) tourné vers le dispositif d'appui (3) ;
- déplacement synchrone des deux capteurs (47) à une vitesse de positionnement définie vers le dispositif de positionnement (61) ;
- mesure de la différence de temps entre la nouvelle arrivée au bord (62) des deux capteurs (47) ;
- calcul d'un angle de rotation ;
- rotation du panneau de verre (1) selon cet angle.
